(19) Europäisches Patentamt
European Patent Office
Office européen des brevets

(11) EP 2 128 182 A1

(12) # EUROPÄISCHE PATENTANMELDUNG

(43) Veröffentlichungstag:
**02.12.2009 Patentblatt 2009/49**

(21) Anmeldenummer: **08157041.8**

(22) Anmeldetag: **28.05.2008**

(51) Int Cl.:
***C08G 59/40*** *(2006.01)* ***C08G 59/68*** *(2006.01)*
***C08L 63/00*** *(2006.01)* ***C09J 163/00*** *(2006.01)*

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **Sika Technology AG**
**6340 Baar (CH)**

(72) Erfinder:
- **Kramer, Andreas**
  **8006, Zürich (CH)**
- **Frick, Karsten**
  **5453, Remetschwil (CH)**

(54) **Hitzehärtende Epoxidharzzusammensetzung enthaltend einen Beschleuniger mit Heteroatomen**

(57) Die vorliegende Erfindung betrifft hitzehärtende Epoxidharzzusammensetzungen, welche sich durch eine hohe Schlagzähigkeit, eine gute Lagerstabilität sowie eine tiefe Aushärtungstemperatur auszeichnen. Die Epoxidharzzusammensetzungen sind insbesondere geeignet für den Einsatz als Rohbauklebstoff und zur Herstellung von Strukturschäumen. Weiterhin wurde gefunden, dass die Verwendung eines Beschleunigers der Formel (I) zur Erhöhung der Schlagzähigkeit von hitzehärtenden Epoxidharzzusammensetzungen führt.



Printed by Jouve, 75001 PARIS (FR)

## Beschreibung

### Technisches Gebiet

Die Erfindung betrifft das Gebiet der schlagzähen hitzehärtenden Epoxidharzzusammensetzungen, insbesondere für den Einsatz als Rohbauklebstoff und zur Herstellung von Strukturschäumen.

### Stand der Technik

Hitzehärtende Epoxidharzzusammensetzungen sind seit langem bekannt. Es wurden schon seit einiger Zeit Anstrengungen unternommen, den grossen Nachteil von Epoxidharzzusammensetzungen, nämlich ihre Sprödigkeit, welche bei Schlagbeanspruchung dazu führt, dass die ausgehärtete Epoxidharzzusammensetzung Risse bekommt, bzw. zerstört wird, zu beheben oder zumindest stark zu vermindern. Dies wurde durch den Zusatz von Zähigkeitsmodifikatoren oder durch chemische Modifikation von Epoxidharzen bereits versucht.
Ein wichtiges Einsatzgebiet von hitzehärtenden Epoxidharzzusammensetzungen findet sich im Fahrzeugbau, insbesondere beim Verkleben oder beim Ausschäumen von Hohlräumen im Rohbau. In beiden Fällen wird nach der Applikation der Epoxidharzzusammensetzung die Karosserie im KTL-(Kathodische Tauchlackierung)-Ofen erhitzt, wodurch auch die hitzehärtende Epoxidharzzusammensetzung ausgehärtet und gegebenenfalls geschäumt wird.
Damit eine schnelle Härtung erfolgen kann, werden neben hitzeaktivierbaren Härtern für Epoxidharze üblicherweise Beschleuniger verwendet. Eine wichtige Kategorie von Beschleunigern sind Harnstoffe. Schlagzähe hitzehärtende Epoxidharzzusammensetzungen, welche Harnstoffe als Beschleuniger aufweisen können, sind beispielsweise aus W02004/106402 A2 und W02004/055092 A1 bekannt.
Es sind derzeit jedoch Bestrebungen im Markt im Gange, die Temperatur der Aushärtung stark abzusenken. Somit ist im Markt ein grosses Bedürfnis nach hitzehärtenden Epoxidharzzusammensetzungen vorhanden, welche auch bei tieferen Temperaturen, d.h. bei einer Temperatur von unter 180°C, bereits nach kurzer Zeit, typischerweise 10 bis 15 Minuten, aushärten. Deshalb werden aromatische Harnstoffe eingesetzt, welche aufgrund ihrer Struktur bedeutend reaktiver sind. Es hat sich jetzt aber gezeigt, dass die Verwendung von derartigen aromatischen Beschleunigern zu grossen Problemen in der Lagerstabilität der hitzehärtenden Epoxidharzzusammensetzungen führt

### Darstellung der Erfindung

Aufgabe der vorliegenden Erfindung ist es daher, schlagzähe hitzehärtende Epoxidharzzusammensetzungen zur Verfügung zu stellen, welche einerseits eine gute Lagerstabilität bei Raumtemperatur aufweisen und andererseits eine Reduktion der notwendigen Härtungstemperatur.
Diese Aufgabe konnte überraschenderweise durch eine hitzehärtende Epoxidharzzusammensetzung gemäss Anspruch 1 gelöst werden. Diese Epoxidharzzusammensetzung lassen sich besonders gut als einkomponentiger hitzehärtender Klebstoff, insbesondere als hitzehärtender einkomponentiger Rohbauklebstoff im Fahrzeugbau, sowie zur Herstellung von Beschichtungen, insbesondere von Lacken, sowie zur Herstellung eines Strukturschaums für die Verstärkung von Hohlräumen, insbesondere von metallischen Strukturen, verwenden.
Völlig überraschend wurde weiterhin gefunden, dass die Verwendung eines Beschleunigers der Formel (I) zur Erhöhung der Schlagzähigkeit von hitzehärtenden Epoxidharzzusammensetzungen führt. Dies gilt auch für den Fall hitzehärtender Epoxidharzzusammensetzungen, welche bereits über ein beträchtliches Mass an Schlagzähigkeit (zum Beispiel gemessen als Schlagfestigkeit nach ISO 11343) verfügen.
Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

In einem ersten Aspekt betrifft die vorliegende Erfindung eine hitzehärtende Epoxidharzzusammensetzung, welche

a) mindestens ein Epoxidharz **A** mit durchschnittlich mehr als einer Epoxidgruppe pro Molekül;
b) mindestens einen Härter **B** für Epoxidharze, welcher durch erhöhte Temperatur aktiviert wird; und
c) mindestens einen Beschleuniger **C** der Formel (I)

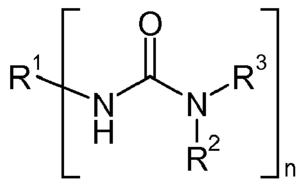

(I)

sowie

d) gegebenenfalls mindestens einen Zähigkeitsverbesserer **D**, umfasst.

In Formel (I) steht $R^1$ für einen n-wertigen aliphatischen, cycloaliphatischen oder araliphatischen Rest mit mindestens einem Heteroatom. Dieses Heteroatom ist kein Heteroatom einer Harnstoff-, Biuret-, Isocyanurat-, Uretdion- oder Diuretdion-Gruppe.
Dieses im Rest $R^1$ vorkommende mindestens eine Heteroatom ist vorzugsweise ein Sauerstoffatom, insbesondere in Form einer Hydroxyl- oder Ethergruppe.

Weiterhin stehen $R^2$ und $R^3$ entweder je unabhängig von einander für eine Alkylgruppe oder Aralkylgruppe, welche gegebenenfalls substituiert ist oder Heteroatome aufweist, oder aber $R^2$ und $R^3$ stehen zusammen für einen zweiwertigen aliphatischen Rest mit 3 bis 20 C-Atomen, der Teil eines, gegebenenfalls substituierten, heterocyclischen Rings mit 5 bis 8, bevorzugt 6, Ringatomen ist.
Weiterhin steht n für einen Wert von 1 bis 10, insbesondere für 1 bis 3, bevorzugt für 1 oder 2.
In diesem Dokument ist die Verwendung des Terms "unabhängig voneinander" in Zusammenhang mit Substituenten, Reste oder Gruppen dahin gehend auszulegen, dass in demselben Molekül die gleich bezeichneten Substituenten, Resten oder Gruppen gleichzeitig mit unterschiedlicher Bedeutung auftreten können.
In der gesamten hier vorliegenden Schrift werden mit der Vorsilbe "Poly" in "Polyisocyanat", "Polyamin", "Polyol", "Polyphenol" und "Polymercaptan" Moleküle bezeichnet, die formal zwei oder mehr der jeweiligen funktionellen Gruppen enthalten.

Unter einem "Zähigkeitsverbesserer" wird in diesem Dokument ein Zusatz zu einer Epoxidharzmatrix verstanden, der bereits bei geringen Zuschlägen von 0.1 - 50 Gew.-%, insbesondere von 0.5 - 40 Gew.-%, eine deutliche Zunahme der Zähigkeit bewirkt und somit in der Lage ist, höhere Biege-, Zug-, Schlag- oder Stossbeanspruchung aufzunehmen, bevor die Matrix einreisst oder bricht.

Als amphiphiles Blockcopolymer wird im vorliegenden Dokument ein Copolymer verstanden, welches mindestens ein Blocksegment, welches mit Epoxidharz mischbar ist, und mindestens ein Blocksegment, welches mit Epoxidharz nicht mischbar ist, enthält. Insbesondere sind amphiphile Blockcopolymere solche, wie sie offenbart werden in WO 2006/052725 A1, WO 2006/052726 A1, WO 2006/052727 A1, WO 2006/052728 A1, WO 2006/052729 A1, WO 2006/052730 A1, WO 2005/097893 A1, deren Inhalt hiermit durch Bezugnahme eingeschlossen wird.

Der Rest $R^2$ und/oder $R^3$ steht vorzugsweise für eine Alkylgruppe mit 1 bis 10, insbesondere 1 bis 4, C-Atomen, bevorzugt für eine Methylgruppe.

Das Epoxidharz **A** mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.

Bevorzugte Epoxidharze weisen die Formel (II) auf

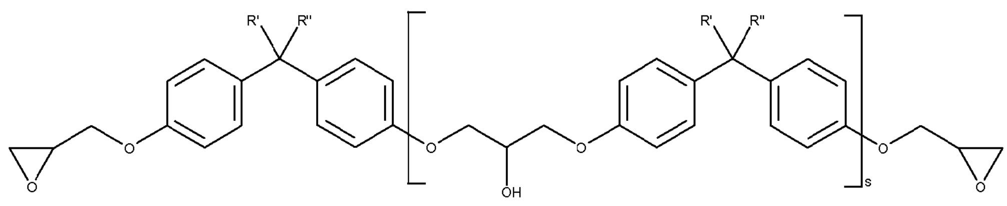

(II)

Hierbei stehen die Substituenten R' und R" unabhängig voneinander entweder für H oder $CH_3$.
Bei Epoxid-Festharzen steht der Index s für einen Wert von > 1.5, insbesondere von 2 bis 12.
Derartige Epoxid-Festharze sind kommerziell erhältlich beispielsweise von Dow oder Huntsman oder Hexion.
Verbindungen der Formel (II) mit einem Index s von 1 bis 1.5 werden vom Fachmann als Semisolid-Epoxidharze bezeichnet. Für die hier vorliegende Erfindung werden sie ebenfalls als Festharze betrachtet. Bevorzugt als Epoxid-Festharze sind jedoch Epoxidharze im engeren Sinn, d.h. wo der Index s einen Wert von > 1.5 aufweist.

Bei Epoxid-Flüssigharze steht der Index s für einen Wert von kleiner als 1. Bevorzugt steht s für einen Wert von kleiner als 0.2.
Es handelt sich somit vorzugsweise um Diglycidylether von Bisphenol-A (DGEBA), von Bisphenol-F sowie von Bisphenol-A/F. Solche Flüssigharze sind beispielsweise als Araldite® GY 250, Araldite® PY 304, Araldite® GY 282 (Huntsman) oder D.E.R.™ 331 oder D.E.R.™ 330 (Dow) oder Epikote 828 (Hexion) erhältlich.
Weiterhin geeignet als Epoxidharz **A** sind sogenannte Novolake. Diese weisen insbesondere die folgende Formel auf:

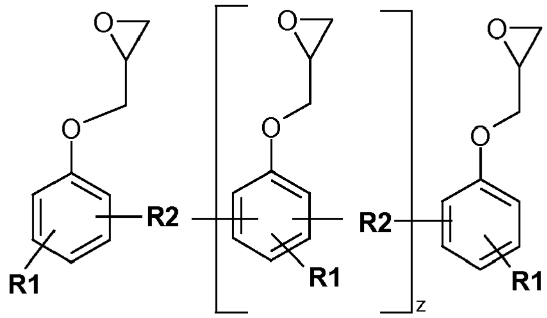

mit **R2**=

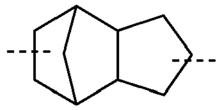

oder $CH_2$, **R1** = H oder Methyl und z = 0 bis 7.

Insbesondere handelt es sich hierbei um Phenol- oder Kresol-Novolake (**R2** = $CH_2$).
Solche Epoxidharze sind unter dem Handelnamen EPN oder ECN sowie Tactix® von Huntsman oder unter der Produktereihe D.E.N.™ von Dow Chemical kommerziell erhältlich.

Bevorzugt stellt das Epoxidharz **A** ein Epoxid-Flüssigharz der Formel (II) dar. In einer noch mehr bevorzugten Ausführungsform enthält die hitzehärtende Epoxidharzzusammensetzung sowohl mindestens ein Epoxid-Flüssigharz der Formel (II) mit s < 1 als auch mindestens ein Epoxid-Festharz der Formel (II) mit s > 1.5.

Der Anteil von Epoxidharzes **A** beträgt vorzugsweise 10 - 85 Gew.-%, insbesondere 15 - 70 Gew.-%, bevorzugt 15 - 60 Gew.-%, am Gewicht der Zusammensetzung.

Die erfindungsgemässe Zusammensetzung enthält weiterhin mindestens einen Härter **B** für Epoxidharze, welcher durch erhöhte Temperatur aktiviert wird. Es handelt sich hierbei vorzugsweise um einen Härter, welcher ausgewählt ist aus der Gruppe bestehend aus Dicyandiamid, Guanamine, Guanidine, Aminoguanidine und deren Derivate. Weiterhin möglich sind Verbindungen der Klasse der Imidazole und Amin-Komplexe.
Besonders bevorzugt als Härter **B** ist Dicyandiamid.

Vorteilhaft beträgt der Gesamtanteil des Härters **B** 1 - 10 Gewichts-%, vorzugsweise 2 - 8 Gewichts-%, bezogen auf das Gewicht der gesamten Zusammensetzung.
Besonders bevorzugt beträgt die Menge des Härters **B** für Epoxidharze, welcher durch erhöhte Temperatur aktiviert wird, 0.1 - 30 Gew.-%, insbesondere 0.2 - 10 Gew.-%, bezogen auf das Gewicht des Epoxidharzes **A.**

Die erfindungsgemässe Zusammensetzung enthält weiterhin mindestens einen Beschleuniger **C** der Formel (I). In einer besonders bevorzugten Ausführungsform steht $R^1$ für ein Epoxid **EP** mit n Epoxidgruppen, bei welchem mindestens eine der n Epoxidgruppen der Formel (IIa) durch die Gruppen der Formel (IIb) ersetzt worden sind, wobei das mit * bezeichnete C-Atom mit dem Stickstoff der Harnstoffgruppe des Beschleunigers der Formel (I) verbunden ist.

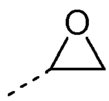 (IIa)

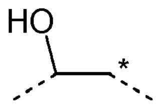 (IIb).

Sind nicht alle n Epoxidgruppen der Formel (IIa) durch Gruppen der Formel (IIb) ersetzt worden, weist der Beschleuniger C der Formel (I) noch Epoxidgruppen auf.

Als Epoxide **EP** sind insbesondere Epoxidgruppen-tragende Reaktivverdünner sowie Epoxidharze geeignet. Als für Epoxide **EP** geeignete Reaktivverdünner sind insbesondere:

- Glycidylether von monofunktionellen gesättigten oder ungesättigten, verzweigten oder unverzweigten, zyklischen oder offenkettigen $C_4$ - $C_{30}$ Alkoholen, insbesondere ausgewählt aus der Gruppe bestehend aus Butanolglycidylether, Hexanolglycidylether, 2-Ethylhexanolglycidylether, Allylglycidylether, Tetrahydrofurfuryl- und Furfurylglycidylether, Trimethoxysilylglycidylether.

- Glycidylether von difunktionellen gesättigten oder ungesättigten, verzweigten oder unverzweigten, zyklischen oder offenkettigen $C_2$ - $C_{30}$ - Alkolen, insbesondere ausgewählt aus der Gruppe bestehend aus Ethylenglykol-, Butandiol-, Hexandiol-, Oktandiolgylcidylether, Cyclohexandimethanoldigylcidylether und Neopentylglycoldiglycidylether.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin oder Trimethylolpropan.
- Glycidylether von Phenol- und Anilinverbindungen insbesondere ausgewählt aus der Gruppe bestehend aus Phenylglycidylether, Kresylglycidylether, p-tert.-Butylphenylglycidylether, Nonylphenolglycidylether, 3-n-Pentadecenylglycidylether (aus Cashewnuss-Schalen-Öl), N,N-Diglycidylanilin und Triglycdiyl von p-Aminophenol.
- Epoxidierte Amine wie N, N-Diglycidylcyclohexylamin.
- Epoxidierte Mono- oder Dicarbonsäuren insbesondere ausgewählt aus der Gruppe bestehend aus Neodecansäureglycidylester, Methacrylsäureglycidylester, Benzoesäureglycidylester, Phthalsäure-, Tetra- und Hexahydrophthalsäurediglycidylester und Diglycidylester von dimeren Fettsäuren sowie Terephthalsäure- und Trimelitsäuregylcidylester.
- Epoxidierte di- oder trifunktionelle, nieder- bis hochmolekulare Polyetherpolyole, insbesondere Polyethylenglycoldiglycidylether oder Polypropyleneglycol-diglycidylether.

Besonders bevorzugt sind Hexandioldiglycidylether, Kresylglycidylether, p-*tert*.-Butylphenylglycidylether, Polypropylenglycoldiglycidylether und Polyethylenglycoldiglycidylether.

Als für Epoxide **EP** geeignete Epoxidharze sind insbesondere diejenigen Epoxidharze geeignet, wie sie bereits vorgängig für das Epoxidharz **A** mit durchschnittlich mehr als einer Epoxidgruppe pro Molekül beschrieben wurden.

Somit steht $R^1$ bevorzugt für einen Rest der Formel (III)

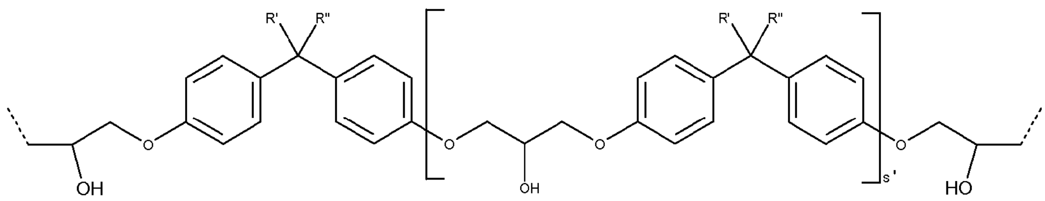

(III)

wobei R' und R" unabhängig voneinander entweder für H oder $CH_3$ stehen und der Index s' für einen Wert von 0 bis 12 steht.

In einer weiteren Ausführungsform steht $R^1$ für einen Rest eines Ethergruppen-haltigen aliphatischen Polyamines, insbesondere eines Polyoxyalkylen-Diamins oder Polyoxyalkylen-Triamins, nach Entfernung der Aminogruppen. Beispiele für Ethergruppen-haltige aliphatische Polyamine sind einerseits Bis-(2-aminoethyl)ether, 4,7-Dioxadecan-1,10-diamin, 4,9-Dioxadodecan-1,12-diamin und höhere Oligomere davon und andererseits Polyoxyalkylen-Diamine und Polyoxyalkylen-Triamine.

Derartige Polyoxyalkylen-Polyamine sind beispielsweise erhältlich unter dem Namen Jeffamine® (von Huntsman Chemicals), unter dem Namen Polyetheramin (von BASF) oder unter dem Namen PC Amine® (von Nitroil) erhältlich.

Als derartige Triamine werden beispielsweise unter der Jeffamine® T-Line von Huntsman Chemicals vertrieben, wie beispielsweise Jeffamine® T-3000, Jeffamine® T-5000 oder Jeffamine® T-403.

Als Polyoxyalkylen-Diamine sind eignen sich insbesondere solche der Formel der Formel (V).

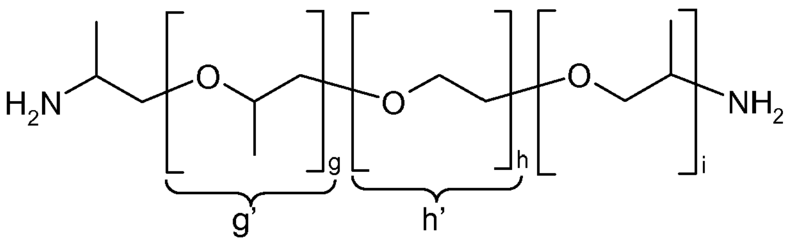

(V)

Hierbei stellen g' das Strukturelement, welches von Propylenoxid stammt, und h' das Strukturelement, welches von Ethylenoxid stammt, dar. Zudem stellen und stehen g, h und i je für Werte von 0 bis 40, mit der der Massgabe, dass die Summe von g, h und i ≥ 1 ist.

Insbesondere bevorzugt sind Jeffamine®, wie sie unter der D-Linie und ED-Linie von Huntsman Chemicals angeboten

werden, wie zum Beispiel Jeffamine® D-230, Jeffamine® D-400, Jeffamine® D-2000, Jeffamine® D-4000, Jeffamine® ED-600, Jeffamine® ED-900, Jeffamine® ED-2003 oder Jeffamine® EDR-148.
Besonders bevorzugt als Ethergruppen-haltiges aliphatisches Polyamine geeignet ist jenes, wie es als Jeffamine® D-230 von Huntsman Chemicals angeboten wird.

Das Molekulargewicht dieser Ethergruppen-haltigen aliphatischen Polyamine beträgt vorzugsweise zwischen 200 und 5000 g/mol.

In einer weiteren Ausführungsform steht $R^1$ für einen Rest einer Aminosäure oder eines Aminosäureesters, bevorzugt eines Aminosäureesters, nach Entfernung der Aminogruppe.

Die Aminosäuren können natürlich oder synthetisch hergestellt sein.
Als Aminosäuren eignen sich insbesondere Aminosäure ausgewählt aus der Gruppe bestehend aus Alanin, Arginin, Asparagin, Asparginsäure, Glutaminsäure, Glutamin, Glycin, Histidin, Isoleucin, Leucin, Lysin, Methionin, Phenylalanin, Serin, Threonin, Trypotophan, Tyrosin und Valin.
Als Aminosäureester eignen sich insbesondere Ester der Aminosäuren, welche ausgewählt sind aus der Gruppe bestehend aus Alanin, Arginin, Asparagin, Asparginsäure, Glutaminsäure, Glutamin, Glycin, Histidin, Isoleucin, Leucin, Lysin, Methionin, Phenylalanin, Serin, Threonin, Trypotophan, Tyrosin und Valin. Bevorzugt sind die Aminosäureester Ester der jeweiligen Aminosäuren mit Alkoholen mit 1 bis 20, bevorzugt 1 bis 4, Kohlenstoffatomen, insbesondere mit Methanol oder Ethanol, bevorzugt mit Methanol.
Weiterhin sind auch Aminosäure, insbesondere Aminosäureester, geeignet, deren Aminogruppe nicht in alpha-Position zur Säure- bzw. Estergruppe sitzt.

Die Beschleuniger **C** der Formel (I) sind synthetisch leicht zugänglich. In einer ersten Variante lassen sie sich aus der Reaktion eines primären aliphatischen, cycloaliphatischen oder araliphatischen Amines der Formel (VIa) und beispielsweise einer Verbindung der Formel (VIb) herstellen.

$R^1[NH_2]_n$ (VIa)

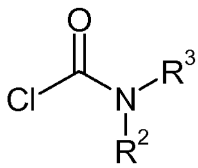 (VIb)

Diese Variante eignet sich insbesondere in den Fällen, in welchen das Polyamin der Formel (VIa) ein Ethergruppen-haltiges aliphatisches Polyamin, insbesondere ein Polyoxyalkylen-Diamin der Formel (V), ist.

Ebenso gut geeignet ist dieser Syntheseweg für diejenigen Fälle, in denen das Amin der Formel (VIa) eine Aminosäure oder ein Aminosäureester, wie vorgängig bereits beschrieben, ist.
Die Verbindungen der Formel (VIb) sind einfach zugänglich, bzw. kommerziell erhältlich. Besonders bevorzugt als Verbindung der Formel (VIb) ist N,N-Dimethyl-carbamoylchlorid. Je nach Stöchiometrie erfolgt die Umsetzung derart, dass alle Aminogruppen oder nur ein Teil der Aminogruppen umgesetzt werden, d.h. unter Umständen weist der Beschleuniger **C** der Formel (I) noch Aminogruppen auf.

Eine zweite Variante der Synthese ist insbesondere für die bereits beschriebenen Fälle geeignet, in denen $R^1$ für ein Epoxid **EP** mit n Epoxidgruppen steht, bei welchem mindestens eine der n Epoxidgruppen der Formel (IIa) durch die Gruppen der Formel (IIb) ersetzt worden sind. Hierbei erfolgt die Synthese vorzugsweise, dadurch dass ein Epoxid **EP** der Formel (VIIa) mit einem Harnstoff der Formel (VIIb) zu einem Beschleuniger der Formel (I), insbesondere zu einem Beschleuniger der Formel (Ia), bzw. (Ib), umgesetzt wird.

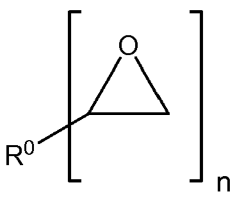 (VIIa)

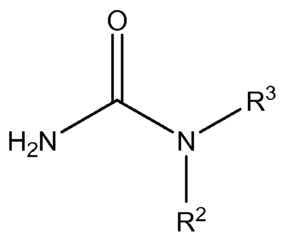 (VIIb)

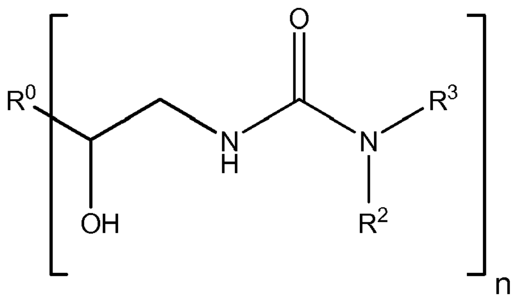

(Ia)

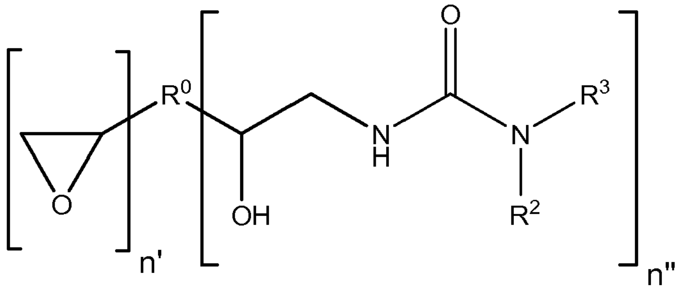

(Ib)

Hierbei ist $R^0$ der Rest des oben genannten Epoxids nach Entfernung von n Epoxidgruppen. Weiterhin steht n' für eine ganze Zahl von 0 bis 9 und n" für eine ganze Zahl von 1 bis 10 mit der Massgabe, dass die Summe von n' und n" den Wert n ergibt.

Die Harnstoffe der Formel (VIIb) sind einfach zugänglich. Besonders bevorzugt als Harnstoff der Formel (VIIb) ist N,N-Dimethylharnstoff. Je nach Stöchiometrie erfolgt die Umsetzung derart, dass alle n Epoxidgruppen oder nur ein Teil der Epoxidgruppen umgesetzt wird, d.h. unter Umständen weist der Beschleuniger **C** der Formel (I) noch Epoxidgruppen auf, wie dies in der Formel (Ib) zum Ausdruck kommt.

Die Menge des Beschleunigers **C** beträgt vorzugsweise 0.01 - 6.0 Gew.-%, insbesondere 0.02 - 4.0 Gew.-%, bevorzugt 0.02 - 2.0 Gew.-%, bezogen auf das Gewicht des Epoxidharzes **A.**

Die hitzehärtende Epoxidharzzusammensetzung enthält gegebenenfalls mindestens einen Zähigkeitsverbesserer **D.** Die Zähigkeitsverbesserer **D** können fest oder flüssig sein.

Insbesondere ist der Zähigkeitsverbesserer **D** ausgewählt ist aus der Gruppe bestehend aus blockierten Polyurethanpolymeren, Flüssigkautschuken, Epoxidharz-modifizierten Flüssigkautschuken und Core-Shell-Polymeren.

In einer Ausführungsform ist dieser Zähigkeitsverbesserer **D** ein Flüssigkautschuk **D1,** welcher ein Acrylonitil/Butadien-Copolymer ist, welches mit Carboxylgruppen oder (Meth)acrylatgruppen oder Epoxidgruppen terminiert ist, oder ein Derivat davon ist. Derartige Flüssigkautschuke sind beispielsweise unter dem unter dem Namen Hypro™(früher Hycar®) CTBN und CTBNX und ETBN von Nanoresins AG, Deutschland, bzw. Emerald Performance Materials LLC) kommerziell erhältlich. Als Derivate sind insbesondere Epoxidgruppen aufweisende Elastomer-modifizierte Prepolymere, wie sie unter der Produktelinie Polydis®, vorzugsweise aus der Produktelinie Polydis® 36.., von der Firma Struktol® (Schill+Seilacher Gruppe, Deutschland) oder unter der Produktelinie Albipox (Nanoresins, Deutschland) kommerziell vertrieben werden, geeignet.

In einer weiteren Ausführungsform ist der Zähigkeitsverbesserer **D** ein Polyacrylatflüssigkautschuk **D2,** der mit flüssigen Epoxidharzen vollständig mischbar ist und sich erst beim Aushärten der Epoxidharzmatrix zu Mikrotröpfchen entmischt. Derartige Polyacrylatflüssigkautschuke sind beispielsweise unter der Bezeichnung 20208-XPA von Rohm und Haas erhältlich.

Es ist dem Fachmann klar, dass natürlich auch Mischungen von Flüssigkautschuken verwendet werden können, insbesondere Mischungen von carboxyl- oder epoxidterminiertes Acrylnitril/Butadien-Copolymeren oder Derivaten davon mit epoxidterminierten Polyurethanprepolymeren.

In einer weiteren Ausführungsform ist der Zähigkeitsverbesserer **D** ein fester Zähigkeitsverbesserer, welcher ein organisches Ionen-getauschtes Schichtmineral **DE1** ist.

Das Ionen-getauschte Schichtmineral **DE1** kann entweder ein Kationen-getauschtes Schichtmineral **DE1c** oder ein Anionen-getauschtes Schichtmineral **DE1a** sein.

Das Kationen-getauschte Schichtmineral **DE1c** wird hierbei erhalten aus einem Schichtmineral **DE1',** bei welchem zumindest ein Teil der Kationen durch organische Kationen ausgetauscht worden sind. Beispiele für derartige Kationen-getauschte Schichtmineralien **DE1c** sind insbesondere diejenigen, welche in US 5,707,439 oder in US 6,197,849 erwähnt

sind. Ebenso ist dort das Verfahren zur Herstellung dieser Kationen-getauschten Schichtminerale **DE1c** beschrieben. Bevorzugt als Schichtmineral **DE1'** ist ein Schichtsilikat. Insbesondere bevorzugt handelt es sich beim Schichtmineral **DE1'** um ein Phyllosilikat, wie sie in US 6,197,849 Spalte 2, Zeile 38 bis Spalte 3, Zeile 5 beschrieben sind, insbesondere um einen Bentonit. Als besonders geeignet haben sich Schichtmineral **DE1'** wie Kaolinit oder ein Montmorillionit oder ein Hectorit oder ein Illit gezeigt.
Zumindest ein Teil der Kationen des Schichtminerals **DE1'** wird durch organische Kationen ersetzt. Beispiele für derartige Kationen sind n-Octylammonium, Trimethyldodecylammonium, Dimethyldodecylammonium oder Bis(hydroxyethyl)octadecylammonium oder ähnliche Derivate von Aminen, die aus natürlichen Fetten und Ölen gewonnen werden können; oder Guanidinium Kationen oder Amidiniumkationen; oder Kationen der N-substituierten Derivate von Pyrrolidin, Piperidin, Piperazin, Morpholin, Thiomorpholin; oder Kationen von 1,4-Diazobicyclo[2.2.2]octan (DABCO) und 1-Azobicyclo [2.2.2]octan; oder Kationen von N-substituierten Derivaten von Pyridin, Pyrrol, Imidazol, Oxazol, Pyrimidin, Chinolin, Isochinoilin, Pyrazin, Indol, Bezimidazol, Benzoxaziol, Thiazol Phenazin und 2,2'-Bipyridin. Weiterhin sind geeignet cyclische Amidiniumkationen, insbesondere solche, wie sie in US 6,197,849 in Spalte 3 Zeile 6 bis Spalte 4 Zeile 67 offenbart werden. Cyclische Ammoniumverbindungen zeichnen sich gegenüber linearen Ammoniumverbindungen durch eine erhöhte Thermostabilität aus, da der thermische Hoffmann - Abbau bei ihnen nicht auftreten kann.
Bevorzugte Kationen-getauschte Schichtminerale **DE1c** sind dem Fachmann unter dem Term Organoclay oder Nanoclay bekannt und sind kommerziell zum Beispiel unter den Gruppennamen Tixogel® oder Nanofil® (Südchemie), Cloisite® (Southern Clay Products) oder Nanomer® (Nanocor Inc.) oder Garamite® (Rockwood) erhältlich.

Das Anionen-getauschte Schichtmineral **DE1a** wird hierbei erhalten aus einem Schichtmineral **DE1"**, bei welchem zumindest ein Teil der Anionen durch organische Anionen ausgetauscht worden sind. Ein Beispiel für ein derartig Anionen-getauschtes Schichtmineral **DE1a** ist ein Hydrotalcit **DE1"**, bei dem zumindest ein Teil der Carbonat-Anionen der Zwischenschichten durch organische Anionen ausgetauscht wurden.
Es ist durchaus auch möglich, dass die Zusammensetzung gleichzeitig ein Kationen-getauschtes Schichtmineral **DE1c** und ein Anionen-getauschtes Schichtmineral **DE1a** enthält.

In einer weiteren Ausführungsform ist der Zähigkeitsverbesserer **D** ein fester Zähigkeitsverbesserer, welcher ein Blockcopolymer **DE2** ist. Das Blockcopolymer **DE2** wird erhalten aus einer anionischen oder kontrollierten radikalischen Polymerisation von Methacrylsäureester mit mindestens einem weiteren eine olefinisch Doppelbindung aufweisenden Monomeren. Als eine olefinische Doppelbindung aufweisende Monomere sind insbesondere solche bevorzugt, bei denen die Doppelbindung unmittelbar mit einem Heteroatom oder mit mindestens einer weiteren Doppelbindung konjugiert ist. Insbesondere sind Monomere geeignet, welche ausgewählt sind aus der Gruppe umfassend Styrol, Butadien, Acrylnitril und Vinylacetat. Bevorzugt sind Acrylat-Styrol-Acrylsäure (ASA) Copolymere, erhältlich z.B. unter dem Namen GELOY 1020 von GE Plastics.
Besonders bevorzugte Blockcopolymere **DE2** sind Blockcopolymere aus Methacrylsäuremethylester, Styrol und Butadien. Derartige Blockcopolymere sind beispielsweise als Triblockcopolymere unter der Gruppenbezeichnung SBM bei Arkema erhältlich.

In einer weiteren Ausführungsform ist der Zähigkeitsverbesserer **D** ein Core-Shell Polymer **DE3.** Core-Shell-Polymere bestehen aus einem elastischen Kernpolymer und einem starren Schalen-Polymer. Insbesondere geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell Struktur bildet sich entweder spontan durch Entmischen eines Blockcopolymeren oder ist durch die Polymerisationsführung als Latex oder Suspensionspolymerisation mit nachfolgender Pfropfung vorgegeben. Bevorzugte Core-Shell-Polymere sind sogenannte MBS Polymere, welche kommerziell unter dem Handelsnamen Clearstrength™ von Atofina, Paraloid™ von Rohm and Haas oder F-351™ von Zeon erhältlich sind.
Besonders bevorzugt sind Core-Shell Polymerpartikel, die allenfalls in Suspension vorliegen. Beispiele hierfür sind GENIOPERL M23A von Wacker mit Polysiloxankern und Acrylatschale, strahlungsvernetzte Kautschukpartikel der NEP Reihe, hergestellt von Eliokem oder Nanoprene von Lanxess oder Paraloid EXL von Rohm und Haas oder Kane ACE MX-120 von Kaneka.
Weitere vergleichbare Beispiele für Core-Shell-Polymere werden unter dem Namen Albidur™ von Nanoresins AG, Deutschland, angeboten.
Ebenso geeignet sind nanoskalige Silikate in Epoxid-Matrix, wie sie unter dem Handelnamen Nanopox von Nanoresins AG, Deutschland, angeboten werden.

In einer weiteren Ausführungsform ist der Zähigkeitsverbesserer **D** ein Umsetzungsprodukt **DE4** eines carboxylierten festen Nitrilkautschuks mit überschüssigem Epoxidharz.

In einer weiteren Ausführungsform ist der Zähigkeitsverbesserer **D** ein blockiertes Polyurethanpolymer der Formel (IV).

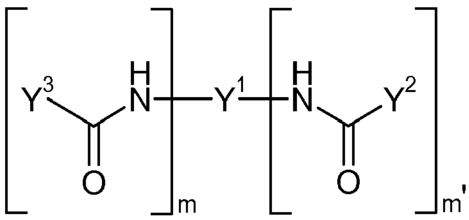

(IV)

Hierbei stehen m und m' je für Werte zwischen 0 und 8, mit der Massgabe, dass m + m' für einen Wert von 1 bis 8 steht.
Bevorzugt ist m verschieden von 0.
Weiterhin steht $Y^1$ für ein mit m+m' Isocyanatgruppen terminiertes lineares oder verzweigtes Polyurethanpolymer **PU1** nach dem Entfernen aller endständigen Isocyanatgruppen.
$Y^2$ steht unabhängig von einander für eine Blockierungsgruppe, welche sich bei einer Temperatur über 100°C abspaltet.
$Y^3$ steht unabhängig von einander für eine Gruppe der Formel (IV').

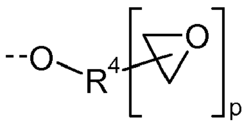

(IV')

Hierbei steht $R^4$ seinerseits für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen und p steht für die Werte 1, 2 oder 3.
Unter einem "araliphatischen Rest" versteht man in diesem Dokument eine Aralkylgruppe, d.h. durch eine durch Arylgruppen substituierte Alkylgruppe (vgl. Römpp, CD Römpp Chemie Lexikon, Version 1, Stuttgart/New York, Georg Thieme Verlag 1995).
$Y^2$ steht insbesondere unabhängig voneinander für einen Substituenten, welcher ausgewählt ist aus der Gruppe bestehend aus

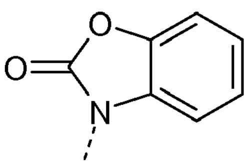 , 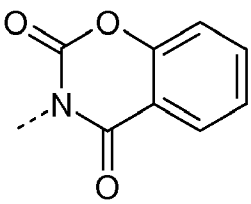 , 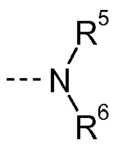 , 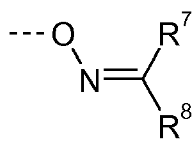 ,

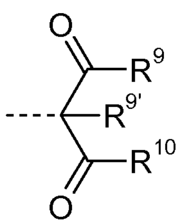 , 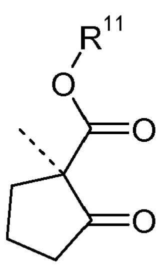 , 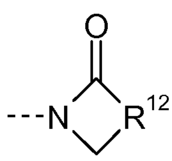 , 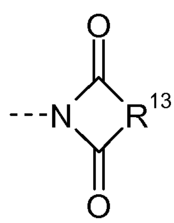 ,

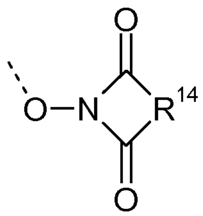 , 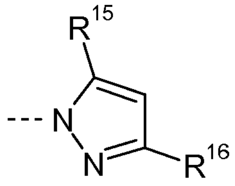 , 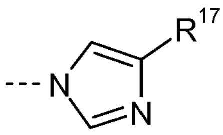 , 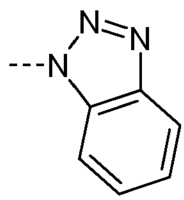 ,

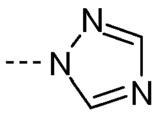 , 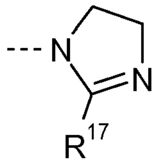

und

---O-$R^{18}$;

Hierbei stehen $R^5$, $R^6$, $R^7$ und $R^8$ je unabhängig voneinander für eine Alkyl- oder Cycloalkyl- oder Aralkyl- oder Arylalkyl-Gruppe oder aber $R^5$ bildet zusammen mit $R^6$, oder $R^7$ zusammen mit $R^8$, einen Teil eines 4- bis 7-gliedrigen Rings, welcher allenfalls substituiert ist.

Weiterhin steht $R^9$, $R^{9'}$ und $R^{10}$ je unabhängig voneinander für eine Alkyl- oder Aralkyl- oder Arylalkyl-Gruppe oder für eine Alkyloxy- oder Aryloxy- oder Aralkyloxy-Gruppe und $R^{11}$ für eine Alkylgruppe.

$R^{13}$ und $R^{14}$ stehen je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe und $R^{15}$, $R^{16}$ und $R^{17}$ stehen je unabhängig voneinander für H oder für eine Alkylgruppe oder für eine Arylgruppe oder eine Aralkylgruppe.

Schliesslich steht $R^{18}$ für eine Aralkylgruppe oder für eine ein- oder mehrkernige substituierte oder unsubstituierte Aromatengruppe, welche gegebenenfalls aromatische Hydroxylgruppen aufweist.

Die gestrichelten Linien in den Formeln dieses Dokumentes stellen jeweils die Bindung zwischen dem jeweiligen Substituenten und dem dazugehörigen Molekülrest dar.

Als $R^{18}$ sind insbesondere einerseits Phenole oder Bisphenole nach Entfernung einer Hydroxylgruppe zu betrachten. Bevorzugte Bespiele für derartige Phenole und Bisphenole sind insbesondere Phenol, Kresol, Resorcinol, Brenzkatechin, Cardanol (3-Pentadecenylphenol (aus Cashewnuss-Schalen-Öl)), Nonylphenol, mit Styrol oder Dicyclopentadien umgesetzte Phenole, Bis-Phenol-A, Bis-Phenol-F und 2,2'-Diallyl-bisphenol-A.

Als $R^{18}$ sind andererseits insbesondere Hydroxybenzylalkohol und Benzylalkohol nach Entfernung einer Hydroxylgruppe zu betrachten.

Falls $R^5$, $R^6$, $R^7$, $R^8$, $R^9$, $R^{9'}$, $R^{10}$, $R^{11}$, $R^{15}$, $R^{16}$ oder $R^{17}$ für eine Alkylgruppe steht, ist diese insbesondere eine lineare oder verzweigte $C_1$-$C_{20}$-Alkylgruppe.

Falls $R^5$, $R^6$, $R^7$, $R^8$, $R^9$, $R^{9'}$, $R^{10}$, $R^{15}$, $R^{16}$, $R^{17}$ oder $R^{18}$ für eine Aralkylgruppe steht, ist diese Gruppierung insbesondere eine über Methylen gebundene aromatische Gruppe, insbesondere eine Benzylgruppe.

Falls $R^5$, $R^6$, $R^7$, $R^8$, $R^9$, $R^{9'}$ oder $R^{10}$ für eine Alkylarylgruppe steht, ist diese insbesondere eine über Phenylen gebundene $C_1$- bis $C_{20}$-Alkylgruppe, wie beispielsweise Tolyl oder Xylyl.

Besonders bevorzugte Reste $Y^2$ sind Reste, welche ausgewählt sind aus der Gruppe bestehend aus

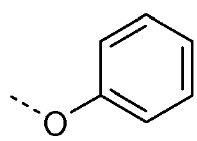 , 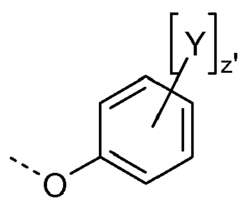 , 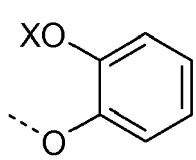 , 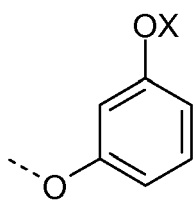 ,

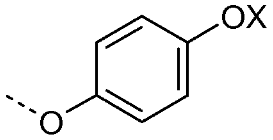,
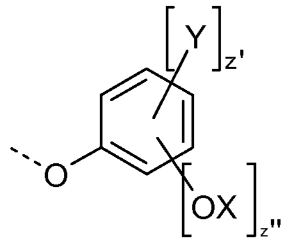,
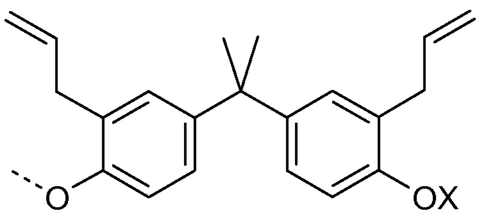,

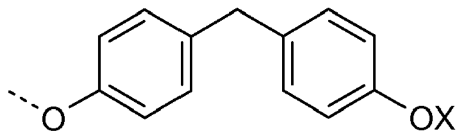 und 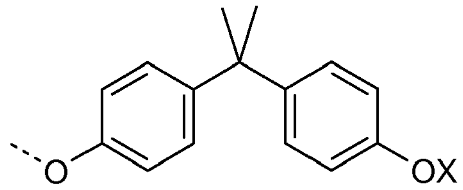.

Der Rest Y steht hierbei für einen gesättigten oder olefinisch ungesättigten Kohlenwasserstoffrest mit 1 bis 20 C-Atomen, insbesondere mit 1 bis 15 C-Atomen. Als Y sind insbesondere Allyl, Methyl, Nonyl, Dodecyl oder ein ungesättigter $C_{15}$-Alkylrest mit 1 bis 3 Doppelbindungen bevorzugt.
Der Rest X steht für H oder für einen Alkyl-, Aryl-, Aralkylgruppe, insbesondere für H oder Methyl.
Die Indices z' und z" stehen für die Werte 0, 1, 2, 3, 4 oder 5, mit der Massgabe, dass die Summe z' + z" für einen Wert zwischen 1 und 5 steht.

Die Herstellung des blockierten Polyurethanpolymers der Formel (IV) erfolgt aus dem Isocyanatgruppen terminierten linearen oder verzweigten Polyurethanpolymeren **PU1** mit einer oder mehreren Isocyanat-reaktiven Verbindungen $Y^2H$ und oder $Y^3H$. Falls mehrere derartige Isocyanat-reaktive Verbindungen eingesetzt werden, kann die Reaktion sequentiell oder mit einer Mischung dieser Verbindungen erfolgen.
Die Umsetzung erfolgt derart, dass die eine oder die mehreren Isocyanat-reaktiven Verbindungen $Y^2H$ und/oder $Y^3H$ stöchiometrisch oder im stöchiometrischen Überschuss eingesetzt werden, um zu gewährleisten, dass alle NCO-Gruppen umgesetzt sind.

Die Isocyanat-reaktive Verbindung $Y^3H$ ist eine Monohydroxyl-Epoxidverbindung der Formel (IVa).

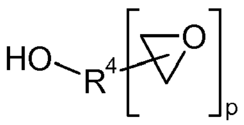 (IVa)

Falls mehrere derartige Monohydroxyl-Epoxidverbindungen eingesetzt werden, kann die Reaktion sequentiell erfolgen oder mit einer Mischung dieser Verbindungen erfolgen.
Die Monohydroxyl-Epoxidverbindung der Formel (IVa) weist 1, 2 oder 3 Epoxidgruppen auf. Die Hydroxylgruppe dieser Monohydroxyl-Epoxidverbindung (IVa) kann eine primäre oder eine sekundäre Hydroxylgruppe darstellen.
Solche Monohydroxyl-Epoxidverbindungen lassen sich beispielsweise durch Umsetzung von Polyolen mit Epichlorhydrin erzeugen. Je nach Reaktionsführung entstehen bei der Umsetzung von mehrfunktionellen Alkoholen mit Epichlorhydrin als Nebenprodukte auch die entsprechenden Monohydroxyl-Epoxidverbindungen in unterschiedlichen Konzentrationen. Diese lassen sich durch übliche Trennoperationen isolieren. In der Regel genügt es aber, das bei der Glycidylisierungsreaktion von Polyolen erhaltene Produktgemisch aus vollständig und partiell zum Glycidylether reagiertem Polyol einzusetzen. Beispiele solcher hydroxylhaltigen Epoxide sind Butandiolmonoglycidylether (enthalten in Butandioldiglycidylether), Hexandiolmonoglycidylether (enthalten in Hexandioldiglycidylether), Cyclohexandimethanolglycidylether, Trimethylolpropandiglycidylether (als Gemisch enthalten in Trimethylolpropantriglycidylether), Glycerindiglycidylether (als Gemisch enthalten in Glycerintriglycidylether), Pentaerythrittriglycidylether (als Gemisch enthalten in Pentaerythrittetraglycidylether). Vorzugsweise wird Trimethylolpropandiglycidylether, welcher zu einem relativ hohen Anteil in üblich hergestellten Trimethylolpropantriglycidylether vorkommt, verwendet.
Es können aber auch andere ähnliche hydroxylhaltige Epoxide, insbesondere Glycidol, 3-Glycidyloxybenzylalkohol oder

Hydroxymethyl-cyclohexenoxid eingesetzt werden. Weiterhin bevorzugt ist der β-Hydroxyether der Formel (IVb), der in handelsüblichen flüssigen Epoxidharzen, hergestellt aus Bisphenol-A (R = $CH_3$) und Epichlorhydrin, zu etwa 15 % enthalten ist, sowie die entsprechenden β-Hydroxyether der Formel (IVb), die bei der Reaktion von Bisphenol-F (R = H) oder des Gemisches von Bisphenol-A und Bisphenol-F mit Epichlorhydrin gebildet werden.

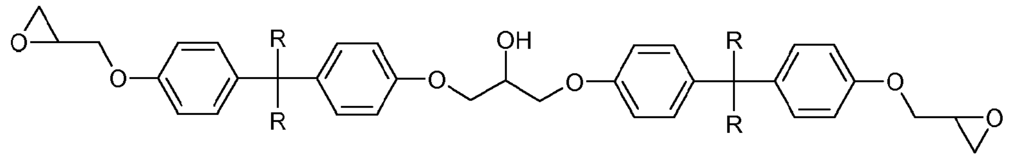 (IVb)

Weiterhin bevorzugt sind auch Destillationsrückstände, welche bei der Herstellung von hochreinen, destillierten Epoxid-Flüssigharzen anfallen. Solche Destillationsrückstände weisen eine bis zu drei Mal höhere Konzentration an hydroxylhaltigen Epoxiden auf als handelübliche undestillierte Epoxid-Flüssigharze. Im Weiteren können auch unterschiedlichste Epoxide mit einer β-Hydroxyether-Gruppe, hergestellt durch die Reaktion von (Poly-)Epoxiden mit einem Unterschuss von einwertigen Nukleophilen wie Carbonsäuren, Phenolen, Thiolen oder sec.- Aminen, eingesetzt werden.

Der Rest $R^4$ ist insbesondere bevorzugt ein dreiwertiger Rest der Formel

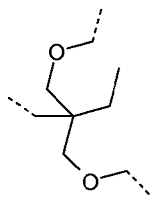 oder 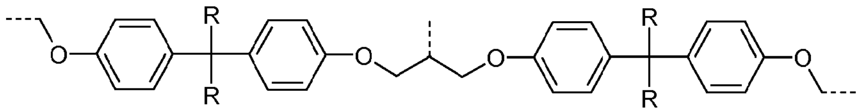

wobei R für Methyl oder H steht.

Die freie primäre oder sekundäre OH-Funktionalität der Monohydroxyl-Epoxidverbindung der Formel (IVa) lässt eine effiziente Umsetzung mit terminalen Isocyanatgruppen von Polymeren zu, ohne dafür unverhältnismässige Überschüsse der Epoxidkomponente einsetzen zu müssen.

Das Polyurethanpolymer **PU1,** auf dem $Y^1$ basiert, lässt sich aus mindestens einem Diisocyanat oder Triisocyanat sowie aus mindestens einem Polymeren $\mathbf{Q_{PM}}$ mit endständigen Amino-, Thiol- oder Hydroxylgruppen und / oder aus einem, gegebenenfalls substituierten, Polyphenol $\mathbf{Q_{PP}}$ herstellen.

Geeignete Diisocyanate sind beispielsweise aliphatische, cycloaliphatische, aromatische oder araliphatische Diisocyanate, insbesondere handelsübliche Produkte wie Methylendiphenyldiisocyanat (MDI), 1,4-Butandiisocyanat, Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat ($H_{12}$MDI), p-Phenylendiisocyanat (PPDI) oder m-Tetramethylxylylen diisocyanat (TMXDI) sowie deren Dimere. Bevorzugt sind HDI, IPDI, MDI oder TDI.

Geeignete Triisocyanate sind beispielsweise Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate.

Selbstverständlich können auch geeignete Mischungen von Di- oder Triisocyanaten eingesetzt werden.

Als Polymere $\mathbf{Q_{PM}}$ mit endständigen Amino-, Thiol- oder Hydroxylgruppen sind insbesondere Polymere $\mathbf{Q_{PM}}$ mit zwei oder drei endständigen Amino-, Thiol- oder Hydroxylgruppen geeignet.

Als derartige geeignete Polymere $\mathbf{Q_{PM}}$ gelten insbesondere diejenigen, wie sie beispielsweise in WO 2008/049857 A1, insbesondere als $\mathbf{Q_{PM}}$ auf Seite 7, Zeile 25 bis Seite 11, Zeile 20, deren Inhalt hiermit insbesondere durch Bezugnahme eingeschlossen wird, offenbart sind.

Die Polymere $\mathbf{Q_{PM}}$ weisen vorteilhaft ein Equivalenzgewicht von 300 - 6000, insbesondere von 600 - 4000, bevorzugt von 700 - 2200 g/Equivalent NCO-reaktiver Gruppen auf.

Als Polymere $\mathbf{Q_{PM}}$ eignen sich insbesondere Polyoxyalkylenpolyole, auch Polyetherpolyole genannt, Hydroxyterminierte Polybutadienpolyole, Styrol-Acrylnitril gepfropfte Polyetherpolyole, Polyhydroxyterminierte Acrylnitril/Butadien-Copolymere, Polyesterpolyole sowie Polycarbonatpolyole.

Als Polyphenol $\mathbf{Q_{PP}}$ sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig

sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.
Besonders eignen sich die Bis- und Trisphenole. Als Bisphenole oder Trisphenole sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoate, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methanoindan, Phenolpthalein, Fluorescein, 4,4'-[bis-(hydroxyphenyl)-1,3-Phenylene-bis-(1-Methyl-ethyliden)] (=Bisphenol-M), 4,4'-[bis-(hydroxyphenyl)-1,4-Phenylenebis-(1-Methyl-ethyliden)] (=Bisphenol-P), 2,2'-Diallyl-bisphenol-A, Diphenole und Dikresole hergestellt durch Umsetzung von Phenolen oder Kresolen mit Di-isopropylidenbenzol, Phloroglucin, Gallsäureester, Phenol- oder Kresolnovolacke mit -OH-Funktionalität von 2.0 bis 3.5 sowie alle Isomeren der vorgenannten Verbindungen.

Besonders geeignet als in der Zusammensetzung gegebenenfalls vorhandenem Zähigkeitsverbesserer **D** sind Zähigkeitsverbesserer, welche ein Hydroxylgruppe(n) aufweisendes amphiphiles Blockcopolymer darstellen, wie sie unter dem Handelsnamen Fortegra™, insbeondere Fortegra™ 100, von Dow Chemical, vertrieben werden, bzw. deren Umsetzungsprodukte mit Polyisocyanaten und gegebenenfalls weiteren Isocyanatreaktiven Verbindungen.

Besonders geeignet als in der Zusammensetzung gegebenenfalls vorhandenem Zähigkeitsverbesserer **D** sind jene, wie sie in den folgenden Artikel bzw. Patentschriften, deren Inhalt hiermit durch Referenz mit eingeschlossen wird, offenbart sind: EP 0 308 664 A1, insbesondere Formel (I), besonders Seite 5, Zeile 14 bis Seite 13, Zeile 24; EP 0 338 985 A1, EP 0 353 190 A1, WO 00/20483 A1, insbesondere Formel (I), besonders Seite 8, Zeile 18 bis Seite 12, Zeile 2; WO 01/94492 A1, insbesondere die als D) und E) bezeichneten Reaktionsprodukte, besonders Seite 10, Zeile 15 bis Seite 14, Zeile 22; WO 03/078163 A1, insbesondere das als B) bezeichnete Acrylatterminierte Polyurethanharz, besonders Seite 14, Zeile 6 bis Seite 14, Zeile 35; WO 2005/007766 A1, insbesondere Formel (I) oder (II), besonders Seite 4, Zeile 5 bis Seite 11, Zeile 20; EP 1 728 825 A1, insbesondere Formel (I), besonders Seite 3, Zeile 21 bis Seite 4, Zeile 47; WO 2006/052726 A1, insbesondere das als b) bezeichnete amphiphilic block copolymer, besonders Seite 6, Zeile 17 bis Seite 9, Zeile 10; WO 2006/052729 A1, insbesondere das als b) bezeichnete amphiphilic block copolymer, besonders Seite 6, Zeile 25 bis Seite 10, Zeile 2; T.J. Hermel-Davidock et al., J.Polym. Sci. Part B: Polym. Phys. 2007, 45, 3338-3348, insbesondere die amphiphilen Blockcopolymere, besonders Seite 3339, 2. Spalte bis 3341 2.Spalte; WO 2004/055092 A1, insbesondere Formel (I), besonders Seite 7, Zeile 28 bis Seite 13, Zeile 15;. WO 2005/007720 A1, insbesondere Formel (I), besonders Seite 8, Zeile 1 bis Seite 17, Zeile 10; WO 2007/020266 A1, insbesondere Formel (I), besonders Seite 3, Zeile 1 bis Seite 11, Zeile 6, WO 2008/049857 A1, insbesondere Formel (I), besonders Seite 3, Zeile 5 bis Seite 6, Zeile 20, WO 2008/049858 A1, insbesondere Formel (I) und (II) , besonders Seite 6, Zeile 1 bis Seite 12, Zeile 15, WO 2008/049859 A1, insbesondere Formel (I), besonders Seite 6, Zeile 1 bis Seite 11, Zeile 10, WO 2008/049860 A1, insbesondere Formel (I), besonders Seite 3, Zeile 1 bis Seite 9, Zeile 6, sowie DE-A-2 123 033, US 2008/0076886 A1, WO 2008/016889 und WO 2007/025007.

Es hat sich gezeigt, dass in der Zusammensetzung vorteilhaft mehrere Zähigkeitsverbesserer vorhanden sind, insbesondere auch mehrere Zähigkeitsverbesserer **D**.

Der Anteil an Zähigkeitsverbesserer **D** wird vorteilhaft in einer Menge von 1 - 35 Gew.-%, insbesondere 1 - 25 Gew.-%, bezogen auf das Gewicht der Zusammensetzung, eingesetzt.

In einer weiteren bevorzugten Ausführungsform enthält die Zusammensetzung zusätzlich mindestens einen Füllstoff **F**. Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff **F** sind sowohl die organisch beschichteten als auch die unbeschichteten kommerziell erhältlichen und dem Fachmann bekannten Formen gemeint.
Ein weiteres Beispiel sind funktionalisierte Alumoxane, wie z. B. in US 6,322,890 beschrieben.
Vorteilhaft beträgt der Gesamtanteil des gesamten Füllstoffs **F** 3 - 50 Gewichts-%, vorzugsweise 5 - 35 Gewichts-%, insbesondere 5 - 25 Gewichts-%, bezogen auf das Gewicht der gesamten Zusammensetzung.

In einer weiteren bevorzugten Ausführungsform enthält die Zusammensetzung ein physikalisches oder chemisches Treibmittel, wie es beispielsweise unter dem Handelsnamen Expancel™ der Firma Akzo Nobel oder Celogen™ der Firma Chemtura oder unter dem Handelsnamen Luvopor® von Lehmann & Voss erhältlich ist. Der Anteil des Treibmittels beträgt vorteilhaft 0.1 - 3 Gew.-%, bezogen auf das Gewicht der Zusammensetzung.

In einer weiteren bevorzugten Ausführungsform enthält die Zusammensetzung zusätzlich mindestens einen Epoxidgruppen-tragenden Reaktivverdünner **G.** Bei diesen Reaktivverdünnern **G** handelt es sich insbesondere um jene Epoxidgruppen-tragenden Reaktivverdünner, wie sie bereits vorgängig als Epoxide **EP** beschrieben wurden.

Vorteilhaft beträgt der Gesamtanteil des epoxidgruppentragenden Reaktivverdünners **G** 0.1 - 20 Gewichts-%, vorzugsweise 0.1 - 8 Gewichts-%, bezogen auf das Gewicht der gesamten Zusammensetzung.

Die hitzehärtende Epoxidharzzusammensetzung kann weiterhin ein Thixotropiermittel **H** auf Basis eines Harnstoffderivates enthalten. Das Harnstoffderivat ist insbesondere ein Umsetzungsprodukt eines aromatischen monomeren Diisocyanates mit einer aliphatischen Aminverbindung. Es ist auch durchaus möglich, mehrere unterschiedliche monomere Diisocyanate mit einer oder mehreren aliphatischen Aminverbindungen oder ein monomeres Diisocyanat mit mehreren aliphatischen Aminverbindungen umzusetzen. Als besonders vorteilhaft hat sich das Umsetzungsprodukt von 4,4'-Diphenylmethylen-diisocyanat (MDI) mit Butylamin erwiesen.
Das Harnstoffderivat ist vorzugsweise in einem Trägermaterial vorhanden. Das Trägermaterial kann ein Weichmacher, insbesondere ein Phthalat oder ein Adipat sein, vorzugsweise ein Diisodecylphthalat (DIDP) oder Dioctyladipat (DOA). Das Trägermittel kann auch ein nicht-diffundierendes Trägermittel sein. Dies ist bevorzugt, um möglichst eine geringe Migration nach Aushärtung von nicht regierten Bestandteilen zu gewährleisten. Bevorzugt sind als nicht-diffundierende Trägermittel blockierte Polyurethanprepolymere.
Die Herstellung von solchen bevorzugten Harnstoffderivaten und Trägermaterialien sind im Detail in der Patentanmeldung EP 1 152 019 A1 beschrieben. Das Trägermaterial ist vorteilhaft ein blockiertes Polyurethanprepolymer, insbesondere erhalten durch Umsetzung eines trifunktionellen Polyetherpolyols mit IPDI und anschliessender Blockierung der endständigen Isocyanatgruppen mit ε-Caprolactam.
Vorteilhaft beträgt der Gesamtanteil des Thixotropiermittels **H** 0 - 40 Gewichts-%, vorzugsweise 5 - 25 % Gewichts-%, bezogen auf das Gewicht der gesamten Zusammensetzung. Das Verhältnis vom Gewicht des Harnstoffderivates zum Gewicht des allenfalls vorhandenen Trägermittels beträgt vorzugsweise 2 / 98 bis 50 / 50, insbesondere 5 / 95 - 25 /75.

Die Zusammensetzung kann weitere Bestandteile, insbesondere Katalysatoren, Stabilisatoren, insbesondere Hitze- und/oder Lichtstabilisatoren, Thixotropiermittel, Weichmacher, Lösungsmittel, mineralische oder organische Füllstoffe, Treibmittel, Farbstoffe und Pigmente, Korrosionsschutzmittel, tenside, Entschäumer und Haftvermittler umfassen.

Als Weichmacher eignen sich insbesondere Phenol-Alkylsulfonsäureester oder Benzolsulfonsäure-N-butylamid, wie sie als Mesamoll® bzw. Dellatol BBS von Bayer kommerziell erhältlich sind.

Als Stabilisatoren eignen sich insbesondere gegebenenfalls substituierte Phenole, wie BHT oder Wingstay® T (Elikem), sterisch gehinderte Amine oder N-Oxylverbindungen wie TEMPO (Evonik).

Es hat sich gezeigt, dass sich die beschriebenen hitzehärtenden Epoxidharzzusammensetzungen besonders zur Verwendung als einkomponentige hitzehärtende Klebstoffe, insbesondere als hitzehärtender einkomponentiger Rohbauklebstoff im Fahrzeugbau, eignen. Ein derartiger einkomponentiger Klebstoff weist breite Einsatzmöglichkeiten auf. Insbesondere sind hiermit hitzehärtende einkomponentige Klebstoffe realisierbar, die sich durch eine hohe Schlagzähigkeit, sowohl bei höheren Temperaturen und vor allem bei tiefen Temperaturen, insbesondere zwischen 0°C bis -40°C auszeichnen. Solche Klebstoffe werden für das Verkleben von hitzestabilen Materialien benötigt. Unter hitzestabilen Materialien werden Materialien verstanden, welche bei einer Aushärtetemperatur von 100 - 220 °C, vorzugsweise 120 - 200°C zumindest während der Aushärtezeit formstabil sind. Insbesondere handelt es sich hierbei um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl, insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.
Mit einem Klebstoff basierend auf einer erfindungsgemässen hitzehärtenden Zusammensetzung ist es möglich, die gewünschte Kombination von hoher Crashfestigkeit sowohl hoher als auch tiefer Härtungstemperatur zu erreichen.
Ein solcher Klebstoff wird insbesondere zuerst mit den zu verklebenden Materialien bei einer Temperatur von zwischen 10° C und 80°C, insbesondere zwischen 10°C und 60°C, kontaktiert und später ausgehärtet bei einer Temperatur von typischerweise 100 - 220 °C, vorzugsweise 120 - 200°C.

Ein weiterer Aspekt der vorliegenden Erfindung betrifft ein Verfahren zur Verklebung von hitzestabilen Substraten, welches die Schritte umfasst:

i) Applizieren einer hitzehärtenden Epoxidharzzusammensetzung, wie sie vorgängig im Detail beschrieben wurde, auf die Oberfläche eines hitzestabilen Substrates **S1,** insbesondere eines Metalls;
ii) Kontaktieren der applizierten hitzehärtenden Epoxidharzzusammensetzung mit der Oberfläche eines weiteren hitzestabilen Substrates **S2,** insbesondere eines Metalls;
iii) Erhitzen der Zusammensetzung auf eine Temperatur von 100 - 220 °C, insbesondere von 120 - 200°C, bevorzugt zwischen 160 und 190°C.

Das Substrat **S2** besteht hierbei aus dem gleichen oder einem unterschiedlichen Material wie das Substrat **S1**.
Die Substrate **S1** und/oder **S2** sind insbesondere die vorgängig erwähnten Metalle und Kunststoffe.

Aus einem derartigen Verfahren zum Verkleben von hitzestabilen Materialien resultiert ein verklebter Artikel. Ein derartiger Artikel ist vorzugsweise ein Fahrzeug oder ein Teil eines Fahrzeugs.

Selbstverständlich können mit einer erfindungsgemässen Zusammensetzung neben hitzehärtenden Klebstoffen auch Dichtmassen oder Beschichtungen realisiert werden. Ferner eignen sich die erfindungsgemässen Zusammensetzungen nicht nur für den Automobilbau sondern auch für andere Anwendungsgebiete. Besonders zu erwähnen sind verwandte Anwendungen im Transportmittelbau wie Schiffe, Lastwagen, Busse oder Schienenfahrzeuge oder im Bau von Gebrauchsgütern wie beispielsweise Waschmaschinen.
Die mittels einer erfindungsgemässen Zusammensetzung verklebten Materialien kommen bei Temperaturen zwischen typischerweise 120°C und -40°C, vorzugsweise zwischen 100°C und -40°C, insbesondere zwischen 80°C und -40°C zum Einsatz.

Eine besonders bevorzugte Verwendung der erfindungsgemässen hitzehärtenden Epoxidharzzusammensetzung ist dessen Verwendung als hitzehärtender einkomponentiger Rohbauklebstoff im Fahrzeugbau oder als Versteifungsmasse oder als schäumbare, hitzehärtende Zusammensetzung für die Verstärkung in Hohlräumen von strukturellen Bauteilen und Verstärkungselementen.

Einen weiteren Aspekt der vorliegenden Erfindung betrifft eine ausgehärtete Epoxidharzzusammensetzung, wie sie durch Erhitzen einer hitzehärtenden Epoxidharzzusammensetzung wie sie vorgängig im Detail beschrieben wurde, erhalten wird. Die Erhitzung erfolgt typischerweise in einem Ofen bei einer Temperatur von 100 - 220 °C, insbesondere von 120 - 200°C, bevorzugt zwischen 160 und 190°C.

Es hat sich gezeigt, dass Beschleuniger der Formel (I), wie sie vorgängig als Bestandteil einer hitzehärtenden Epoxidharzzusammensetzung bereits im Detail beschrieben worden sind, sich generell als Beschleuniger für hitzehärtende Epoxidharzzusammensetzungen eignen. Somit betrifft ein weiterer Aspekt der vorliegenden Erfindung die Verwendung eines Beschleunigers der Formel (I), wie er vorgängig in einer hitzehärtenden Epoxidharzzusammensetzung bereits im Detail beschrieben wurde, zur Beschleunigung der Aushärtung von hitzehärtenden Epoxidharzzusammensetzungen.
Die Beschleunigung tritt einerseits dadurch zu Tage, dass der Zusatz eines Beschleunigers **C** der Formel (I) zu einer hitzehärtenden Epoxidharzzusammensetzung bei gegebener Härtungstemperatur bedeutend schneller erfolgt, als die entsprechende Zusammensetzung ohne Beschleunigers **C** der Formel (I).
Andererseits konnte festgestellt werden, dass durch den Zusatz eines Beschleunigers **C** der Formel (I) zu einer hitzehärtenden Epoxidharzzusammensetzung diese bei bedeutend tieferer Temperatur gehärtet werden kann, als dies der Fall ohne den eines Beschleuniger **C** der Formel (I) ist. Dies ist im DSC durch eine Verschiebung des Reaktionspeaks, bzw. durch die Verschiebung des sogenannten Onset-Punktes, beim erstmaligen Aufheizen, einer einen Beschleuniger **C** der Formel (I) enthaltenden Epoxidharzmischung, zu tieferen Temperaturen ersichtlich verglichen mit der entsprechenden Zusammensetzung ohne Beschleuniger **C** der Formel (I). Es lassen sich beispielsweise Epoxidharzzusammensetzungen mit Dicyandiamid als Härter **B**, bereits mit geringen Zusatz, typischerweise 0.4 bis 3%, an Beschleuniger der Formel (I) bei Temperaturen, welche um bis zu 20°C, zuweilen sogar noch mehr, tiefer liegen, als die entsprechende Epoxidharzzusammensetzung ohne Beschleuniger der Formel (I) aushärten.
Der Zusatz an Beschleuniger der Formel (I) führt jedoch nicht dazu, dass die Lagerstabilität der entsprechenden Epoxidharzzusammensetzung stark verschlechtert wird, ganz im Gegensatz zu (nicht erfindungsgemässen) aromatischen Harnstoff-Beschleunigern.
Obwohl die Aushärtung bei tieferen Temperaturen erfolgt, wird die Glasübergangstemperatur (Tg) der ausgehärteten Epoxidharzzusammensetzung nicht oder nur geringfügig verschlechtert.
Zudem wirkt sich der Zusatz an Beschleuniger der Formel (I) auch nicht negativ auf die Schlagzähigkeitseigenschaften von Zähigkeitsverbesserer aufweisenden hitzehärtenden Epoxidharzzusammensetzungen aus, wie dies bei gewissen (nicht erfindungsgemässen) aliphatischen Harnstoff-Beschleunigern der Fall ist. Ganz im Gegenteil wurden sogar gefunden, dass die Schlagzähigkeit bei der Verwendung Beschleunigern der Formel (I) sogar merklich gesteigert werden kann.

## Beispiele

Härter für Epoxidharze

N,N'-Dimethylharnstoff (=1,3-Dimethylharnstoff)(**"*DMH*"**)

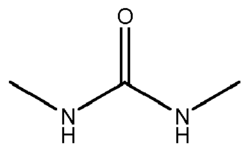

N,N'-Dimethylharnstoff wurde bei Fluka, Schweiz, bezogen.

N,N,N',N'-Tetramethylharnstoff (=1,1,3,3-Tetramethylharnstofif)("***TMH***")

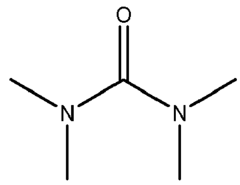

N,N,N',N'-Tetramethylharnstoff wurde bei Fluka, Schweiz, bezogen.

3,3'-(4-Methyl-1,3-Phenylen)bis (1,1-Dimethylharnstoff) ("***MPBDMH***")

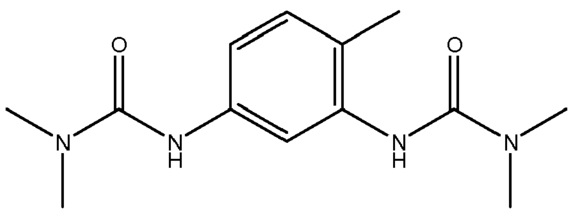

3,3'-(4-Methyl-1,3-phenylen)bis (1,1-Dimethylharnstoff) wurde bei Sigma-Aldrich, Schweiz, bezogen.

3-(3-Hydroxypropyl)-1,1-Dimethylharnstoff ("***C-1***")

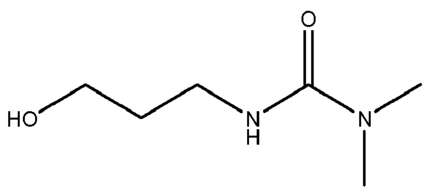

15.0g (139.5 mmol) N,N-Dimethylcarbamoylchlorid und 80ml Dioxan wurden in einen 250ml Zweihalskolben mit Rückflusskühler gegeben. Anschliessend wurden 13.66g (135 mmol) Triethylamin sowie 10.44g (139 mmol) 3-Amino-1-propanol zugegeben. Nach dem Abklingen der Exothermie wurde die Mischung während 1 h bei 60°C und 3h bei 90°C gerührt, wobei sich langsam eine hellbraune Suspension bildete. Nachdem die Suspension auf 50°C abgekühlt worden war, wurde der Festkörper abfiltriert. Das Lösemittel wurde am Rotationsverdampfer bei 60°C abgezogen. Anschliessend wurde das Produkt unter Rühren während 2h bei 100°C und 10mbar aufgereinigt. Es wurden ca. 17.0 g einer braunen, viskosen Flüssigkeit erhalten.

Umsetzungsprodukt N,N-Dimethyl-carbamoylchlorid / Jeffamine® D-230 ("***C-2***")

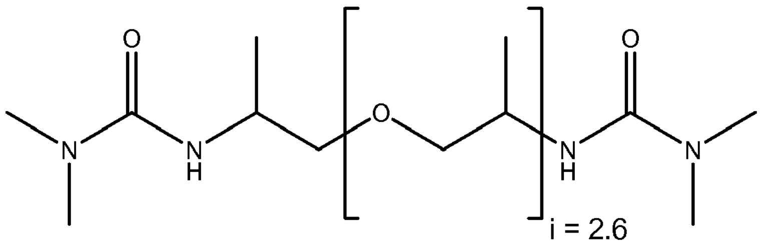

15.0g (139.5 mmol) N,N-Dimethylcarbamoylchlorid und 80ml Dioxan wurden in einen 250ml Zweihalskolben mit Rückflusskühler gegeben. Anschliessend wurden 13.66g (135 mmol) Triethylamin sowie 14.88g (ca. 63mmol) Jeffamine® D-230 (Huntsman) zugegeben. Nach dem Abklingen der leichten Exothermie wurde die Mischung während 3h bei 80°C und 1h bei 100°C gerührt, wobei sich langsam eine milchig-gelbliche Suspension bildete. Die so erhaltene Suspension wurde zwei Mal über einen Faltenfilter filtriert. Das Lösemittel wurde am Rotationsverdampfer bei 60°C abgezogen. Anschliessend wurde das Produkt unter Rühren während 2h bei 100°C und 0.3 mbar aufgereinigt. Es wurden ca. 17.0 g einer orange-roten, viskosen Flüssigkeit mit einem berechneten "Harnstoff-Äquivalentsgewicht" von ca. 191 g/eq erhalten.

Umsetzungsprodukt N,N-Dimethyl-carbamoylchlorid/Tyrosin-methylester (**"*C-3*"**)

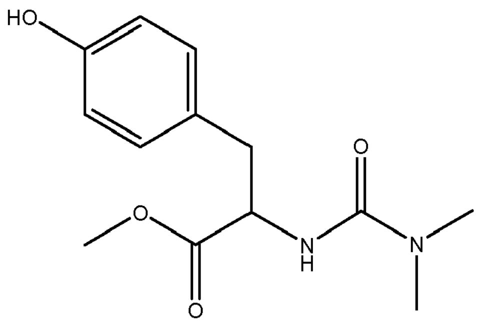

In einen 250ml Zweihalskolben wurden 9.07g (46.5mmol) Tyrosinmethylester und 50ml Dioxan eingewogen. Anschliessend wurden nacheinander 4.55 g (45.0 mmol) Triethylamin und 5.0 g (46.5 mmol) N,N-Dimethylcarbamoylchlorid zugegeben. Nach dem Abklingen der Exothermie wurde die Mischung während 2h bei 70°C gerührt, wobei sich langsam eine gelbliche, immer schwerer rührbare Suspension bildete. Die so erhaltene Suspension wurde über eine Glas-Sinter-Nutsche filtriert. Das Lösemittel wurde am Rotationsverdampfer bei 60°C abgezogen. Es wurden ca. 12.0 g eines leicht orangen Pulvers erhalten.

Umsetzungsprodukt N,N-Dimethylharnstoff / Bisphenol-A-diglycidylether (**"*C-4*"**)

20.0g (ca. 116 mmol Epoxidgruppen) destillierter Bisphenol-A-diglycidylether (Epilox A17-01), 10.0g (113.5 mmol) N,N-Dimethylharnstoff und 40ml Ethanol wurden in einen 250 ml Zweihalskolben mit Rückflusskühler gegeben. Es wurde während 7h bei 90°C Badtemperatur rückflussiert, dabei waren gegen Ende der Reaktion nur noch Spuren N,N-Dimethylharnstoff nachweisbar. Nachdem das Lösemittel bei 60°C am Rotationsverdampfer abgezogen worden war, wurden ca. 30g einer hochviskosen, zum Teil wachsartigen Masse mit einem "Harnstoff-Äquivalentsgewicht" von ca. 258g/eq erhalten.

Umsetzungsprodukt N,N-Dimethylharnstoff / Epoxid-Festharz (**"*C-5*"**)

50.0g (ca. 69 mmol Epoxidgruppen) Epoxid-Festharz Araldite® GT-7004, 6.04g (68.5mmol) N,N-Dimethylharnstoff, und 250ml Ethanol wurden in einen 500 ml Zweihalskolben mit Rückflusskühler gegeben. Nach 6h Rückflussieren bei 90°C Badtemperatur war der Epoxidgehalt auf ca. 0.1 eq/kg gesunken, worauf die Reaktion abgebrochen wurde. Nachdem das Lösemittel bei 60°C am Rotationsverdampfer abgezogen worden und das Rohprodukt während 6h bei 50°C im Vakuumofen bei 50mbar getrocknet worden war, wurden ca. 55g eines harten Festkörpers erhalten. Das Produkt mit einem berechneten "Harnstoff-Äquivalentsgewicht" von ca. 820g/eq wurde im Mörser zerkleinert.

Umsetzungsprodukt N,N-Dimethylharnstoff / Novolak-Epoxidharz(**"*C-6*"**)

25.0g (ca. 140 mmol Epoxidgruppen) epoxidierter Novolak D.E.N. 438, 12.3 (140mmol) N,N-Dimethylharnstoff, und 120ml Ethanol wurden in einen 500 ml Zweihalskolben mit Rückflusskühler gegeben. Beim Erhöhen der Temperatur wurde ein 2-Phasen Gemisch erhalten. Nach 7h Rückflussieren bei 90°C Badtemperatur war der Epoxidgehalt auf ca. 0.2 eq/kg gesunken, worauf die Reaktion abgebrochen wurde. Nachdem das Lösemittel bei 60°C am Rotationsverdampfer abgezogen worden und das Rohprodukt während 6h bei 50°C im Vakuumofen bei 50mbar getrocknet worden war, wurden ca. 35g eines zuerst teilweise harten, teilweise gallertartigen Festkörpers erhalten. Nach einer Woche Lagerung bei RT war das Produkt mit einem berechneten "Harnstoff-Äquivalentsgewicht" von ca. 267g/eq hart und konnte im Mörser zerkleinert werden.

Herstellung eines Zähigkeitsverbesserers (**"*D-1*"**)

150 g Poly-THF 2000 (OH-Zahl 57 mg/g KOH) und 150 Liquiflex H (OH-Zahl 46 mg/g KOH) wurden 30 Minuten unter Vakuum bei 105°C getrocknet. Nachdem die Temperatur auf 90°C reduziert worden war, wurden 61.5 g IPDI und 0.14 g Dibutylzinndilaurat zugegeben. Die Reaktion wurde unter Vakuum bei 90°C bis zur Konstanz des NCO-Gehaltes bei 3.10% nach 2.0 h geführt (berechneter NCO-Gehalt: 3.15%). Anschliessend wurden 96.1 g Cardanol als Blockierungsmittel zugegeben. Es wurde bei 105°C unter Vakuum weitergerührt, bis der NCO-Gehalt nach 3.5h unter 0.1% gesunken war. Das Produkt wurde so als Zähigkeitsverbesserer ***D-1*** verwendet.

Tabelle1. Eingesetzte Rohstoffe.

| | |
|---|---|
| D.E.R. 330 (Bisphenol-A-diglycidylether = "*DGEBA*") | Dow |
| Polypox R7 (tert-Butylphenyl-glycidylether) = "*Polypox*") | UPPC |
| Polydis 3614, Epoxidharz-modifiziertes CTBN (= "*Polydis*") | Struktol |
| Dicyandiamid (= "*Dicy*") | Degussa |
| Poly-THF 2000 (Difunktionelles Polybutylenglykol) (OH-Equivalentgewicht = ca. 1000 g/OH-Equivalent) | BASF |
| Liquiflex H (Hydroxylterminertes Polybutadien) (OH-Equivalentgewicht = ca. 1230 g/OH-Equivalent) | Krahn |
| Isophoron-diisocyanat (= "*IPDI*") | Evonik |
| Cardolite NC-700 (Cardanol, meta-substituiertes Alkenyl-mono-Phenol) | Cardolite |

*Herstellung der Zusammensetzungen*

Es wurden gemäss Angaben in Tabelle 2 die Referenzzusammensetzungen ***Ref.1 - Ref. 4*** sowie die erfindungsgemässen Zusammensetzungen ***1, 2, 3, 4, 5*** und ***6*** hergestellt.
In den Referenzbeispielen sind jeweils kein (***Ref.*1**), bzw. Beschleuniger, welcher nicht der Formel (I) entsprechen, eingesetzt, während bei den Beispielen ***1, 2, 3, 4, 5*** und ***6*** ein der Formel (I) entsprechender Beschleuniger verwendet wurde.. Die Menge der eingesetzten Beschleuniger wurden derart berechnet, dass die Gesamtkonzentration an Harnstoffgruppen konstant war.

**Prüfmethoden:**

*Zugscherfestigkeit (ZSF) (DIN EN 1465)*

Die Probekörper wurden aus den beschriebenen Zusammensetzungen und mit elektrolytisch verzinktem DC04 Stahl (eloZn) mit dem Mass 100 x 25 x 0.8 mm hergestellt, dabei betrug die Klebfläche 25 x 10mm bei einer Schichtdicke von 0.3 mm. Gehärtet wurde während 30 Min. bei 180°C ("$ZSF_{180}$"), bzw. während 10 Min. bei 165°C ("$ZSF_{165}$") in einem Umluftofen. Die Messung erfolgte nach dem Abkühlen auf Raumtemperatur nach einem Tag bei einer Zuggeschwindigkeit von 10mm/min.

*Schlagschälarbeit (ISO 11343)*

Die Probekörper wurden aus den beschriebenen Zusammensetzungen und mit elektrolytisch verzinktem DC04 Stahl (eloZn) mit dem Mass 90 x 20 x 0.8 mm hergestellt, dabei betrug die Klebfläche 20 x 30 mm bei einer Schichtdicke von 0.3mm. Gehärtet wurde 30 Min. bei 180°C. Die Messung der Schlagschälarbeit erfolgte jeweils bei 23°C. Die

Schlaggeschwindigkeit betrug 2 m/s. Als Bruchenergie ("BE") in Joule wird die Fläche unter der Messkurve (von 25% bis 90%, gemäss ISO 11343) angegeben.
Als Erhöhung Schlagzähigkeit gegenüber dem Referenzbeispiel ***Ref.1*** wurde in Tabelle der Wert "$\Delta_{BE}$" (in % angegeben) gemäss der folgenden Formel bestimmt:

$$\Delta_{BE} = [BE/BE(\textbf{\textit{Ref.1}})]-1.$$

*Viskosität*

Die Klebstoffproben wurde auf einem Viskosimeter Bohlin CVO 120, Platte/Platte (Durchmesser 25mm, Spaltmass 1 mm), Frequenz 5 Hz, 0.01 Auslenkung, Temperatur 23-53°C, 10°C/min, gemessen. Die Viskosität wurde hierbei als komplexe Viskosität bei 25°C aus der gemessenen Kurve ermittelt.
Die Klebstoffe wurden nach der Herstellung während 1 Tag bei 25°C, bzw. während 1 Woche bei 60°C, gelagert. Nach dem Erkalten auf Raumtemperatur wurde die Viskosität gemessen und als "Visk (1d, 25°C)", bzw. als "Visk (1w, 60°C)" in Tabelle 2 angegeben. Viskositätszunahme ($\Delta_{visk}$ ) wurde berechnet (in % angegeben) gemäss der Formel

$$[\text{Visk (1w, 60°C)/ Visk (1d, 25°C)}]-1.$$

*Glasübergangstemperatur*

Von den so gemischten Epoxidharz-Zusammensetzungen wurde ein auf einem Mettler DSC 822$^{E}$ Gerät jeweils ein DSC aufgenommen (Aufheizung von 25°C auf 250°C, mit einer Heizgeschwindigkeit von 10 K/Minute). Aus der gemessenen Kurve wurden einerseits das Maximum des Reaktionspeaks als $T_{Peak-DSC}$ sowie des aus der Kurve berechneten Onsets $T_{onset-Dsc}$ bestimmt.

*Beschleunigung*

Von den so gemischten Epoxidharz-Zusammensetzungen wurde ein auf einem Mettler DSC 822$^{E}$ Gerät jeweils ein DSC aufgenommen (Aufheizung von 25°C auf 250°C, mit einer Heizgeschwindigkeit von 10 K/Minute). Aus der gemessenen Kurve wurden einerseits das Maximum des Reaktionspeaks als $T_{Peak-DSC}$ sowie des aus der Kurve berechneten Onsets $T_{onset-Dsc}$ bestimmt.

*Glasübergangstemperatur ($T_g$)*

Die Glasübergangstemperatur wurde mittels DSC bestimmt. Es wurde hierfür ein Gerät Mettler DSC822$^{e}$ verwendet. 10 - 20 mg der Zusammensetzungen wurden jeweils in einen Aluminiumtiegel eingewogen. Nachdem die Probe im DSC während 30 Min. bei 175°C gehärtet worden war, wurde die Probe auf minus 20°C abgekühlt und anschliessend mit einer Heizrate von 10°C/min bis 150°C aufgeheizt. Die Glasübergangstemperatur wurde mit Hilfe der DSC-Software aus der gemessenen DSC-Kurve bestimmt.
Die Ergebnisse dieser Prüfungen sind in Tabelle 2 zusammengestellt.

Tabelle2. Zusammensetzungen und Resultate.

| | ***Ref.1*** | ***Ref.2*** | ***Ref.3*** | ***Ref.4*** | ***1*** | ***2*** | ***3*** | ***4*** | ***5*** | ***6*** |
|---|---|---|---|---|---|---|---|---|---|---|
| *DGEBA* [GT[1]] | 40.0 | 40.0 | 40.0 | 40.0 | 40.0 | 40.0 | 40.0 | 40.0 | 40.0 | 40.0 |
| *Polypox* [GT[1]] | 3.0 | 3.0 | 3.0 | 3.0 | 3.0 | 3.0 | 3.0 | 3.0 | 3.0 | 3.0 |
| *Polydis* [GT[1]] | 15.0 | 15.0 | 15.0 | 15.0 | 15.0 | 15.0 | 15.0 | 15.0 | 15.0 | 15.0 |
| ***D-1*** [GT[1]] | 15.0 | 15.0 | 15.0 | 15.0 | 15.0 | 15.0 | 15.0 | 15.0 | 15.0 | 15.0 |
| *Dicy* [GT[1]] | 4.01 | 4.01 | 4.01 | 4.01 | 4.01 | 4.01 | 4.01 | 4.01 | 4.01 | 4.01 |
| ***DMH*** [GT[1]] | | 0.34 | | | | | | | | |
| ***TMH*** [GT[1]] | | | 0.45 | | | | | | | |

(fortgesetzt)

| | ***Ref.1*** | ***Ref.2*** | ***Ref.3*** | ***Ref.4*** | ***1*** | ***2*** | ***3*** | ***4*** | ***5*** | ***6*** |
|---|---|---|---|---|---|---|---|---|---|---|
| ***MPBOMH*** [GT[1]] | | | | 0.51 | | | | | | |
| ***C-1*** [GT[1]] | | | | | 0.56 | | | | | |
| ***C-2*** [GT[1]] | | | | | | 0.75 | | | | |
| ***C-3*** [GT[1]] | | | | | | | 1.03 | | | |
| ***C-4*** [GT[1]] | | | | | | | | 1.00 | | |
| ***C-5*** [GT[1]] | | | | | | | | | 3.16 | |
| ***C-6*** [GT[1]] | | | | | | | | | | 1.03 |
| Füllstofifmischung [GT[1]] | 19.0 | 19.0 | 19.0 | 19.0 | 19.0 | 19.0 | 19.0 | 19.0 | 19.0 | 19.0 |
| | | | | | | | | | | |
| $ZSF_{180}$ [MPa] | 21.4 | 21.7 | 21.4 | 21.7 | 21.5 | 21.8 | 21.4 | 22.0 | 20.9 | 21.1 |
| $ZSF_{165}$ [MPa] | n.m.[2] | n.m.[2] | n.m.[2] | 20.1 | 21.1 | 21.5 | 20.0 | 21.3 | 19.7 | 19.2 |
| BE [J] | 14.2 | 14.4 | 13.9 | 16.1 | 18.4 | 17.9 | 16.8 | 16.5 | 16.0 | 14.8 |
| $\Delta_{BE}$ 10/01 | | 1 | -2 | 13 | 30 | 26 | 18 | 16 | 13 | 4 |
| Visk (1d, 25°C) [mPas] | 395 | 360 | 345 | 350 | 230 | 454 | 471 | 259 | 630 | 408 |
| Visk (1w, 60°C) [mPas] | 395 | 455 | 420 | 1340 | 320 | 500 | 596 | 370 | 893 | 541 |
| $\Delta_{visk}$ [%] | | 26 | 22 | 283 | 39 | 10 | 27 | 43 | 42 | 33 |
| $T_g$ [°C] | 106 | 103 | 103 | 105 | 99 | 101 | 103 | 99 | 103 | 103 |
| $T_{Onset\text{-}DSC}$ [°C] | 189 | 185 | 188 | 172 | 173 | 180 | 174 | 172 | 168 | 178 |
| $T_{Peak\text{-}DSC}$ [°C] | 198 | 194 | 197 | 181 | 180 | 187 | 184 | 180 | 178 | 188 |
| [1] GT= Gewichtsteile<br>[2].n.m.=nicht messbar | | | | | | | | | | |

Die Ergebnisse aus Tabelle 2 zeigen, dass die aliphatischen Beschleuniger in Vergleichsbeispiel ***Ref.2*** und ***Ref.3*** die Härtungstemperatur der Epoxidharzzusammensetzung im Vergleich zur Zusammensetzung ohne Beschleuniger (***Ref.1***) nicht beschleunigten nur minimal herunter setzen können, während dies bei den Beispielen mit Beschleunigern gemäss Formel (I) eine markante Reduktion vorhanden ist (Beispiele ***1*** bis ***6***).

Vergleichsbeispiel ***Ref.4*** zeigt, dass aromatische, nicht der Formel (I) entsprechende, Beschleuniger, zwar eine Reduktion der Härtungstemperatur ermöglichen, aber dass derartige Zusammensetzungen nicht lagerstabil sind. Beispiele ***1*** bis ***6***) hingegen sind lagerstabil.

Weiterhin wurde gefunden, dass der Zusatz von Beschleunigern, welche der Formel (I) (Beispiele ***1*** bis ***6***) entsprechen, die Schlagzähigkeit zuweilen sehr stark verstärken, während dies bei den aliphatischen Beschleunigern, welche nicht der Formel (I) entsprechen (***Ref.2*** und ***Ref.3***) dies nicht der Fall ist. Besonders ausgeprägt ist dies bei den Beispielen ***1, 2*** und ***3***.

## Patentansprüche

**1.** Hitzehärtende Epoxidharzzusammensetzung umfassend

a) mindestens ein Epoxidharz **A** mit durchschnittlich mehr als einer Epoxidgruppe pro Molekül;
b) mindestens einen Härter **B** für Epoxidharze, welcher durch erhöhte Temperatur aktiviert wird;
c) mindestens einen Beschleuniger **C** der Formel (I)

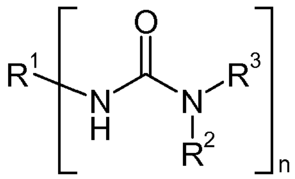 (I)

wobei $R^1$ für einen n-wertigen aliphatischen, cycloaliphatischen oder araliphatischen Rest steht mit mindestens einem Heteroatom, welches kein Heteroatom einer Harnstoff-, Biuret-, Isocyanurat-, Uretdion- oder Diuretdion-Gruppe ist;
$R^2$ und $R^3$
entweder

je unabhängig von einander für eine Alkylgruppe oder Aralkylgruppe, welche gegebenenfalls substituiert ist oder Heteroatome aufweist, stehen;

oder

zusammen für einen zweiwertigen aliphatischen Rest mit 3 bis 20 C-Atomen, der Teil eines, gegebenenfalls substituierten, heterocyclischen Rings mit 5 bis 8, bevorzugt 6, Ringatomen ist, stehen;

n für einen Wert von 1 bis 10, insbesondere für 1 bis 3, bevorzugt für 1 oder 2, steht;
sowie
d) gegebenenfalls mindestens einen Zähigkeitsverbesserer **D.**

**2.** Hitzehärtende Epoxidharzzusammensetzung gemäss Anspruch 1, **dadurch gekennzeichnet, dass** das im Rest $R^1$ vorkommende mindestens eine Heteroatom ein Sauerstoffatom, insbesondere in Form einer Hydroxyl- oder Ethergruppe, ist.

**3.** Hitzehärtende Epoxidharzzusammensetzung gemäss Anspruch 1 oder 2, **dadurch gekennzeichnet, dass** $R^2$ und/oder $R^3$ für eine Alkylgruppe mit 1 bis 10, insbesondere 1 bis 4, C-Atomen, bevorzugtfür eine Methylgruppe, steht.

**4.** Hitzehärtende Epoxidharzzusammensetzung gemäss einem der vorhergehenden Ansprüche, **dadurch gekennzeichnet, dass** $R^1$ für ein Epoxid mit n Epoxidgruppen steht, bei welchem mindestens eine der n Epoxidgruppen der Formel (IIa) durch die Gruppen der Formel (IIb) ersetzt worden sind, wobei das mit * bezeichnete C-Atom mit dem Stickstoff der Harnstoffgruppe des Beschleunigers der Formel (I) verbunden ist

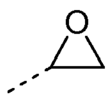 (IIa) 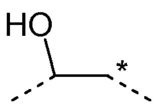 (IIb).

**5.** Hitzehärtende Epoxidharzzusammensetzung gemäss einem der vorhergehenden Ansprüche, **dadurch gekennzeichnet, dass** $R^1$ für einen Rest der Formel (III) steht,

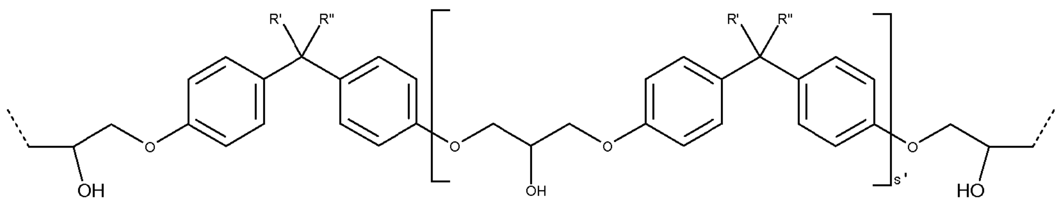 (III)

wobei R' und R" unabhängig voneinander entweder für H oder $CH_3$ stehen und der Index s' für einen Wert von 0 bis 12 steht.

6. Hitzehärtende Epoxidharzzusammensetzung gemäss einem der Ansprüche 1 bis 3, **dadurch gekennzeichnet, dass** $R^1$ für einen Rest eines Ethergruppen-haltigen aliphatischen Polyamines, insbesondere eines Polyoxyalkylen-Diamins oder Polyoxyalkylen-Triamins, nach Entfernung der Aminogruppen steht.

7. Hitzehärtende Epoxidharzzusammensetzung gemäss einem der Ansprüche 1 bis 3, **dadurch gekennzeichnet, dass** $R^1$ für einen Rest eines Aminosäure oder Aminosäureesters nach Entfernung der Aminogruppe steht.

8. Hitzehärtende Epoxidharzzusammensetzung gemäss einem der vorhergehenden Ansprüche, **dadurch gekennzeichnet, dass** der Zähigkeitsverbesserer **D** ausgewählt ist aus der Gruppe bestehend aus blockierten Polyurethanpolymeren, Flüssigkautschuken, Epoxidharz-modifizierten Flüssigkautschuken, Blockcopolymeren und Core-Shell-Polymeren.

9. Hitzehärtende Epoxidharzzusammensetzung gemäss einem der vorhergehenden Ansprüche, **dadurch gekennzeichnet, dass** der Zähigkeitsverbesserer **D** ein Flüssigkautschuk ist, welcher ein Acrylonitil/Butadien-Copolymer ist, welches mit Carboxylgruppen oder (Meth)acrylatgruppen oder Epoxidgruppen terminiert ist, oder ein Derivat davon ist.

10. Hitzehärtende Epoxidharzzusammensetzung gemäss einem der vorhergehenden Ansprüche, **dadurch gekennzeichnet, dass** der Zähigkeitsverbesserer **D** ein blockiertes Polyurethanpolymer der Formel (IV) ist

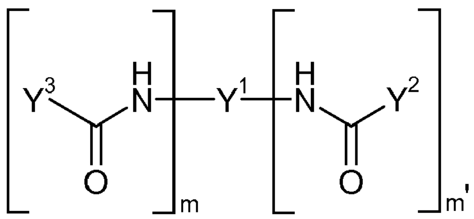

(IV)

wobei
$Y^1$ für ein mit m+m' Isocyanatgruppen terminiertes lineares oder verzweigtes Polyurethanpolymer **PU1** nach dem Entfernen aller endständigen Isocyanatgruppen steht;
$Y^2$ unabhängig von einander für eine Blockierungsgruppe, welche sich bei einer Temperatur über 100°C abspaltet, steht;
$Y^3$ unabhängig von einander für eine Gruppe der Formel (IV') steht

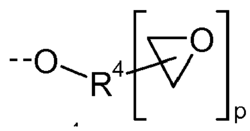

(IV')

wobei $R^4$ für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen, steht;

p = 1, 2 oder 3 und
m und m' je für Werte zwischen 0 und 8 stehen, mit der Massgabe, dass m +m' für einen Wert von 1 bis 8 steht.

11. Hitzehärtende Epoxidharzzusammensetzung gemäss Anspruch 10, **dadurch gekennzeichnet, dass** $Y^2$ für einen Rest steht, welcher ausgewählt ist aus der Gruppe bestehend aus

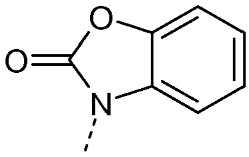 , 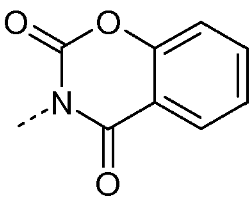 , 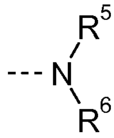 , 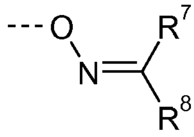 ,

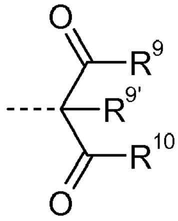 , 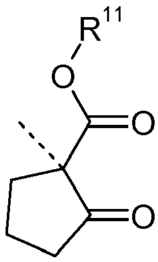 , 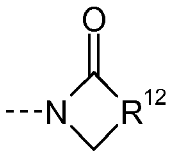 , 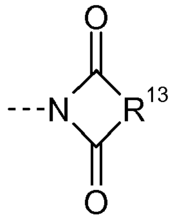 ,

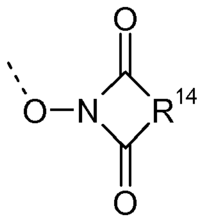 , 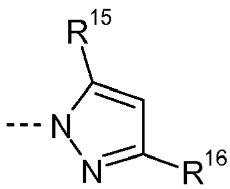 , 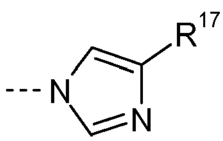 , 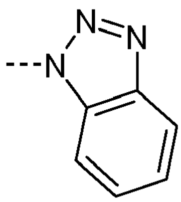 ,

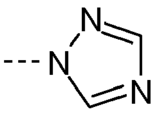 , 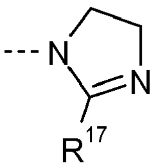 und 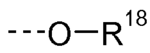 ;

wobei
$R^5$, $R^6$, $R^7$ und $R^8$ je unabhängig voneinander für eine Alkyl- oder Cycloalkyl- oder Aryl- oder Aralkyl- oder Arylalkyl-Gruppe steht
oder $R^5$ zusammen mit $R^6$, oder $R^7$ zusammen mit $R^8$, einen Teil eines 4- bis 7- gliedrigen Rings bilden, welcher allenfalls substituiert ist;
$R^9$, $R^{9'}$ und $R^{10}$ je unabhängig voneinander für eine Alkyl- oder Aralkyl- oder Aryl- oder Arylalkyl-Gruppe oder für eine Alkyloxy- oder Aryloxy- oder Aralkyloxy-Gruppe steht;
$R^{11}$ für eine Alkylgruppe steht,
$R^{12}$, $R^{13}$ und $R^{14}$ je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe stehen;
$R^{15}$, $R^{16}$ und $R^{17}$ je unabhängig voneinander für H oder für eine Alkylgruppe oder für eine Arylgruppe oder eine Aralkylgruppe stehen; und
$R^{18}$ für eine Aralkylgruppe oder für eine ein- oder mehrkernige substituierte oder unsubstituierte Aromatengruppe steht, welche gegebenenfalls aromatische Hydroxylgruppen aufweist.

12. Hitzehärtende Epoxidharzzusammensetzung gemäss Anspruch 10 oder 11, **dadurch gekennzeichnet, dass** m verschieden von 0 ist.

13. Hitzehärtende Epoxidharzzusammensetzung gemäss einem der vorhergehenden Ansprüche, **dadurch gekennzeichnet, dass** die Epoxidharzzusammensetzung mindestens ein physikalisches oder chemisches Treibmittel, insbesondere in einer Menge von 0.1 - 3 Gew.-%, bezogen auf das Gewicht der Zusammensetzung, enthält.

**14.** Hitzehärtende Epoxidharzzusammensetzung gemäss einem der vorhergehenden Ansprüche, **dadurch gekennzeichnet, dass** der Anteil des Epoxidharzes **A** 10 - 85 Gew.-%, insbesondere 15 - 70 Gew.-%, bevorzugt 15 - 60 Gew.-%, am Gewicht der Zusammensetzung beträgt.

**15.** Hitzehärtende Epoxidharzzusammensetzung gemäss einem der vorhergehenden Ansprüche, **dadurch gekennzeichnet, dass** die Menge des Härters **B** für Epoxidharze, welcher durch erhöhte Temperatur aktiviert wird, 0.1 - 30 Gew.-%, insbesondere 0.2 - 10 Gew.-%, bezogen auf das Gewicht des Epoxidharzes **A** beträgt.

**16.** Hitzehärtende Epoxidharzzusammensetzung gemäss einem der vorhergehenden Ansprüche, **dadurch gekennzeichnet, dass** die Menge des Beschleunigers C 0.01 - 6.0 Gew.-%, insbesondere 0.02 - 4.0 Gew.-%, bevorzugt 0.02 - 2.0 Gew.-%, bezogen auf das Gewicht des Epoxidharzes **A** beträgt.

**17.** Verwendung einer hitzehärtenden Epoxidharzzusammensetzung gemäss einem der Ansprüche 1 bis 16 als einkomponentiger hitzehärtender Klebstoff, insbesondere als hitzehärtender einkomponentiger Rohbauklebstoff im Fahrzeugbau.

**18.** Verwendung eines Beschleunigers der Formel (I), wie er in einer hitzehärtenden Epoxidharzzusammensetzung gemäss einem der Ansprüche 1 bis 16 vorkommt, zur Beschleunigung der Aushärtung von hitzehärtenden Epoxidharzzusammensetzungen.

**19.** Verfahren zur Verklebung von hitzestabilen Substraten umfassend die Schritte

i) Applizieren einer hitzehärtenden Epoxidharzzusammensetzung gemäss einem der Ansprüche 1 bis 16 auf die Oberfläche eines hitzestabilen Substrates **S1,** insbesondere eines Metalls;
ii) Kontaktieren der applizierten hitzehärtenden Epoxidharzzusammensetzung mit der Oberfläche eines weiteren hitzestabilen Substrates **S2,** insbesondere eines Metalls;
iii) Erhitzen der Zusammensetzung auf eine Temperatur von 100 - 220 °C, insbesondere von 120 - 200°C, bevorzugt zwischen 160 und 190°C;

wobei das Substrat **S2** aus dem gleichen oder einem unterschiedlichen Material wie das Substrat **S1** besteht.

**20.** Ausgehärtete Epoxidharzzusammensetzung, erhalten durch Erhitzen einer hitzehärtenden Epoxidharzzusammensetzung gemäss einem der Ansprüche 1 bis 16

Europäisches Patentamt
European Patent Office
Office européen des brevets

# EUROPÄISCHER RECHERCHENBERICHT

Nummer der Anmeldung
EP 08 15 7041

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 562 241 A (RENNER ALFRED [CH]) 31. Dezember 1985 (1985-12-31)<br>* Zusammenfassung *<br>* Spalte 5, Zeile 67 - Spalte 6, Zeile 9 *<br>* Ansprüche 5-7,10 *<br>----- | 1,2,18, 20 | INV.<br>C08G59/40<br>C08G59/68<br>C08L63/00<br>C09J163/00 |
| X | US 4 507 445 A (ANDREWS CHRISTOPHER M [GB]) 26. März 1985 (1985-03-26)<br>* Ansprüche 1,3,6,17-20 *<br>----- | 1,2, 18-20 | |
| X | EP 1 916 269 A (SIKA TECHNOLOGY AG [CH]) 30. April 2008 (2008-04-30)<br>* Ansprüche 11,21,22,28 *<br>* Seite 15, Absatz 74 *<br>* Seite 11, Absatz 56 - Seite 12 *<br>----- | 1,17-20 | |
| X | EP 0 603 131 A (CIBA GEIGY AG [CH]) 22. Juni 1994 (1994-06-22)<br>* Zusammenfassung *<br>* Seite 5, Zeile 54 - Seite 6, Zeile 6 *<br>* Ansprüche 1,9 *<br>----- | 1,17-20 | RECHERCHIERTE SACHGEBIETE (IPC) |
| A | WO 2008/038257 A (LOCTITE R & D LTD [IE]; HENKEL KGAA [DE]; BURNS BARRY N [IE]; TULLY RA) 3. April 2008 (2008-04-03)<br>* Ansprüche 7,9,10 *<br>----- | 1-20 | C08G<br>C08L<br>C09J |
| A,D | WO 2004/106402 A (DEGUSSA [DE]; ANTELMANN BJOERN [CH]; HUBER SYLVIA [DE]; GUETHNER THOMA) 9. Dezember 2004 (2004-12-09)<br>* Ansprüche 1,7 *<br>----- | 1-20 | |

Der vorliegende Recherchenbericht wurde für alle Patentansprüche erstellt

2

| Recherchenort | Abschlußdatum der Recherche | Prüfer |
|---|---|---|
| München | 30. Oktober 2008 | Mill, Sibel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 08 15 7041

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-10-2008

| Im Recherchenbericht angeführtes Patentdokument | Datum der Veröffentlichung | Mitglied(er) der Patentfamilie | Datum der Veröffentlichung |
|---|---|---|---|
| US 4562241 A | 31-12-1985 | KEINE | |
| US 4507445 A | 26-03-1985 | CA 1209297 A1 | 05-08-1986 |
| | | DE 3362453 D1 | 10-04-1986 |
| | | EP 0108712 A1 | 16-05-1984 |
| EP 1916269 A | 30-04-2008 | WO 2008049857 A1 | 02-05-2008 |
| EP 0603131 A | 22-06-1994 | CA 2111601 A1 | 19-06-1994 |
| | | JP 6220169 A | 09-08-1994 |
| WO 2008038257 A | 03-04-2008 | US 2008076886 A1 | 27-03-2008 |
| WO 2004106402 A | 09-12-2004 | CA 2527099 A1 | 09-12-2004 |
| | | CN 1798787 A | 05-07-2006 |
| | | DE 10324486 A1 | 16-12-2004 |
| | | EP 1629025 A2 | 01-03-2006 |
| | | JP 2007504341 T | 01-03-2007 |
| | | US 2007027274 A1 | 01-02-2007 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2004106402 A2
- WO 2004055092 A1
- WO 2006052725 A1
- WO 2006052726 A1
- WO 2006052727 A1
- WO 2006052728 A1
- WO 2006052729 A1
- WO 2006052730 A1
- WO 2005097893 A1
- US 5707439 A
- US 6197849 B
- WO 2008049857 A1
- EP 0308664 A1
- EP 0338985 A1
- EP 0353190 A1
- WO 0020483 A1
- WO 0194492 A1
- WO 03078163 A1
- WO 2005007766 A1
- EP 1728825 A1
- WO 2005007720 A1
- WO 2007020266 A1
- WO 2008049858 A1
- WO 2008049859 A1
- WO 2008049860 A1
- DE 2123033 A
- US 20080076886 A1
- WO 2008016889 A
- WO 2007025007 A
- US 6322890 B
- EP 1152019 A1


### In der Beschreibung aufgeführte Nicht-Patentliteratur


- **T.J. Hermel-Davidock et al.** *J.Polym. Sci. Part B: Polym. Phys.,* 2007, vol. 45, 3338-3348